# NEUE EUROPÄISCHE PATENTSCHRIFT

(11) **EP 2 892 324 B2**
(45) Veröffentlichungstag und Bekanntmachung des Hinweises auf die Entscheidung über den Einspruch: **24.05.2023**
(45) Hinweis auf die Patenterteilung: 06.11.2019
(21) Anmeldenummer: 13756152.8
(22) Anmeldetag: 02.09.2013
(51) Int. Cl.: A01J 5/007, A01J 7/00, A01J 7/04

(54) **AUTOMATISCHE REINIGUNGSANLAGE ZUR REINIGUNG/BEHANDLUNG VON ZITZEN EINES MILCHTIERES**
AUTOMATIC CLEANING SYSTEM FOR CLEANING/TREATING TEATS OF A DAIRY ANIMAL
INSTALLATION DE NETTOYAGE AUTOMATIQUE DE NETTOYAGE/TRAITEMENT DE TRAYONS D'UN ANIMAL LAITIER

(30) Priorität: 05.09.2012 DE 102012215751
(43) Veröffentlichungstag der Anmeldung: 15.07.2015
(73) Patentinhaber: Maier, Jakob, 86842 Türkheim (DE); Hatzack, Wilfried, 86842 Türkheim (DE)
(72) Erfinder: Maier, Jakob, 86842 Türkheim (DE); Hatzack, Wilfried, 86842 Türkheim (DE)
(74) Vertreter: Grünecker Patent- und Rechtsanwälte PartG mbB
(86) Internationale Anmeldenummer: PCT/EP2013/068061
(87) Internationale Veröffentlichungsnummer: WO 2014/037295

(56) Entgegenhaltungen:
- EP-A1- 0 535 754
- EP-A1- 1 520 468
- WO-A2-2011/098994
- DE-A1- 10 351 549
- GB-A- 1 415 318
- US-B1- 6 443 094

## Beschreibung

Die vorliegende Erfindung betrifft das automatisierte Melken von Milchtieren unter Anwendung mehrerer Melkbecher, wobei insbesondere eine Reinigung bzw. Desinfektion der Zitzen vor dem Ansetzen der Melkbecher und/oder nach dem Abnehmen der Melkbecher durchgeführt wird.

Mit der zunehmenden Globalisierung der Agrarmärkte werden an die Erzeuger von Milch und Milchprodukten zunehmend höhere Anforderungen gestellt. Zum einen muss die Milch unter Berücksichtigung der internationalen Futtermittelmärkte mit den sich daraus ergebenden schwankenden Rohstoffpreisen möglichst preisgünstig erzeugt werden, zum anderen ist eine hohe Qualität der Milch sicherzustellen. Um die Erzeugung großer Mengen von Milch in einem Agrarbetrieb zu ermöglichen, werden voll automatische oder semiautomatische Melkanlagen eingesetzt, so dass eine Vielzahl von Tieren mit möglichst geringem Personalaufwand gemolken werden kann. Zwar bieten vollautomatisierte Melkanlagen, so genannte Melkroboter, die Möglichkeit, das für die Erzeugung der Milch erforderliche Personal zahlenmäßig stark zu reduzieren, da im Prinzip der gesamte Melkvorgang automatisch ablaufen kann. Dennoch sind die äußerst hohen Anschaffungskosten sowie der Aufwand in Bezug auf Wartung des vollautomatisierten Systems sowie der relativ kleine Durchsatz und die in der Regel ständig erforderliche Verfügbarkeit des Bedienpersonals zur Behebung relativ häufig auftretender Störungen wichtige Gesichtspunkte, die das Einführen vollautomatisierter Anlagen auch in kleineren und mittleren Agrarbetrieben als ungünstig erscheinen lassen. Daher werden in vielen Betrieben semiautomatische Melkanlagen betrieben, in denen bestimmte Handlungen oder zumindest gewisse Überwachungsfunktionen sowie der Zeitablauf des gesamten Melkvorgangs der Herde unter der Steuerung des Bedienpersonals durchgeführt werden. Beispielsweise erfolgt häufig das Anlegen der Melkbecher an die Zitzen der Tiere manuell. Der Melkvorgang selbst findet in der Regel so statt, dass durch Erzeugen eines gewissen Unterdruckes in einem Melkbecher ein Milchfluss von der Zitze zum Melkbecher in Gang gesetzt wird, von wo die Milch dann in eine entsprechende Sammelleitung abgeführt wird. Seit der Einführung automatischer und semiautomatischer Melkanlagen in Agrarbetrieben ist viel Aufwand betrieben worden, um einen möglichst effizienten Betrieb von Melkanlagen zu gewährleisten, da es für einen dauerhaften hohen Ertrag äußerst wichtig ist, einen dem natürlichen Saugvorgang des Kalbes an dem Euter des Muttertieres nachempfundenen Melkvorgang mittels der automatischen Melkanlage auszuführen. D. h., beim automatisierten bzw. semiautomatisierten Melkvorgang soll einerseits der Bediener nur geringfügig oder gar nicht in den Melkvorgang eingreifen, um damit den Anteil an Personalkosten in einem Agrarbetrieb gering zu halten, andererseits soll dennoch der Melkvorgang trotz des fehlenden manuellen Eingreifens des Bedieners mit einem hohem Maß an fachlicher Kompetenz ausgeführt werden, so dass ein hohes Maß an "Natürlichkeit" des automatisierten Melkvorgangs sichergestellt wird. Es lässt sich zeigen, dass ein dauerhaft hoher Ertrag von Milchtieren in der Regel nur dann zu gewährleisten ist, wenn über das gesamte Jahr hinweg ein hoher Ausmelkungsgrad erreicht wird, da dann die milchproduzierenden Zellen, d. h. die Alveolen, nachhaltig zu einer dauerhaft hohen Produktion von Milch angeregt werden. Dazu ist es in der Regel erforderlich, gewisse physiologische Aspekte, etwa eine ausreichende Stimulation, geeignete Druckverhältnisse an der Zitze, und insbesondere ein hohes Maß an Hygiene einzuhalten. Unter Berücksichtigung dieser Aspekte können somit bereits durch den Melkvorgang selbst, unabhängig von anderen Faktoren, die die physische und psychische Verfassung der Tiere zusätzlich beeinflussen, die Menge und die Qualität der Milch wesentlich bestimmt werden. D. h., bei einer möglichst guten Anpassung des maschinellen Melkvorgangs an die physiologischen Gegebenheiten des Milchtieres lässt sich eine dauerhafte Eutergesundheit erreichen, die wiederum die Vorraussetzung ist, langfristig einen hohen Ertrag bei hoher Qualität der Milch zu erreichen, wodurch letztlich auch der wirtschaftliche Erfolg eines Milchbetriebs sichergestellt wird. Beispielsweise sind ein ausreichend hoher Ausmelkungsgrad und ein hoher Hygienestandard nicht nur für die insgesamt erzeugte Milchmenge, sondern auch für die Qualität der Milch wesentliche Aspekte, da insbesondere die Keimzahl der Milch langfristig durch einen im Hinblick auf diese Aspekte optimierten Melkvorgang deutlich reduziert werden kann.

Neben den vielen rein physiologischen Aspekten, die beim maschinellen Melken zu berücksichtigen sind, etwa die Stimulation, der Druckwert des Vakuums, etc., sind auch die hygienischen Vorgaben für die Tiergesundheit und somit letztlich für die Qualität der Milch entscheidend. Beispielsweise wird selbst in kleineren und mittleren Agrarbetrieben eine Vielzahl von Milchtieren nacheinander mit dem gleichen Satz an Melkbechern gemolken. Unter diesen Voraussetzungen ist es nicht nur besonders wichtig, die Hygiene bei einem einzelnen Melkvorgang auf möglichst hohem Niveau zu halten, indem etwa ein Kontakt der Milch mit tierischen Exkrementen und dergleichen vermieden wird, sondern es ist auch die Verschleppung von Keimen von einem Tier zum anderen möglichst einzuschränken oder zu verhindern, so dass ein hohes Maß an Tiergesundheit auch bei größeren Tierbeständen gewährleistet ist. Beispielsweise sieht der Gesetzgeber in den diversen Ländern entsprechende Regelungen vor, die in einer so genannten Milchverordnung verankert sind, die einen entsprechenden Hygienestandard gewährleisten sollen. Die Einhaltung dieser Hygienestandards ist jedoch nicht nur im Hinblick auf das Erfüllen der gesetzlichen Vorgaben wichtig, sondern führt langfristig auch zu einer besseren Tiergesundheit und damit auch zu einer höheren Milchleistung.

Voraussetzung für einen hohen hygienischen Standard für jeden einzelnen Melkvorgang ist daher eine wirksame Reinigung des Euters oder zumindest der Zitzen des Tieres vor dem Anlegen der Melkbecher sowie eine Nachbehandlung des Euters nach dem Melkvorgang, um eine Beaufschlagung des Euters beim zuvor stattfindenden Melkvorgang mit möglichen Keimen zu verringern, so dass ein Eindringen möglicher Keime in den nach dem Melkvorgang empfindlichen Strichkanal möglichst verhindert wird. In vielen vollautomatisierten Anlagen wird versucht, diese hygienischen Aspekte zu berücksichtigen, indem eine Reinigung der Zitzen vor dem unmittelbaren Anlegen der Melkbecher erfolgt, während eine Nachbehandlung des Euters in separaten Stationen stattfindet. In semi-automatischen Anlagen, in denen das Anlegen der Melkbecher häufig manuell vonstatten geht, wird eine Reinigung der Zitzen vom Bediener manuell durchgeführt, wobei jedoch die Effizienz und die Art der Reinigung durch die individuelle Einstellung des Bedieners wesentlich beeinflusst sind. Beispielsweise wird unter starkem Zeitdruck gegebenenfalls die Reinigungsphase gekürzt oder sogar vollständig weggelassen und auch die Verwendung entsprechender Reinigungsmittel kann stark variieren entsprechend der aktuellen Situation in dem jeweiligen Betrieb.

In ähnlicher Weise unterliegt die Reinigung nach erfolgtem Melkvorgang ebenfalls starken Schwankungen aufgrund unterschiedlicher Gegebenheiten in dem jeweiligen Milchbetrieb sowie der Auslastung des einzelnen Bedieners. Häufig ist zu beobachten, dass eine abschließende Nachbehandlung, die im weiteren der Einfachheit ebenfalls allgemein als eine Reinigung oder ein Dipp-Vorgang bezeichnet wird, vollständig weggelassen wird, da dieser Vorgang einen deutlich höheren Aufwand für das Bedienpersonal insbesondere beim Melken einer größeren Anzahl an Tieren bedeutet. Die Wirksamkeit und Dauer der entsprechenden Reinigungsprozesse vor und nach dem Melken hängen somit von der entsprechenden Person, den momentan herrschenden Bedingungen, und dergleichen ab. Somit ist eine dauerhaft hohe Qualität und Zuverlässigkeit der entsprechenden Reinigungsprozesse unter Umständen nicht gewährleistet, insbesondere wenn eine hohe Arbeitsbelastung sowie ein unterschiedlicher Ausbildungsgrad des entsprechenden Fachpersonals anzutreffen sind.

Die Druckschrift WO 2011/098994 A2 beschreibt eine Melkvorrichtung, in der Melkbecher von einer ersten Stellung, in der sie horizontal und geschützt durch eine Abdeckung im Unterboden des Melkstands angeordnet sind, in eine zweite Stellung gebracht werden können, in der sie aufrecht unter den Zitzen eines Tieres stehen. In dieser Stellung kann auch eine Sprüheinrichtung aktiviert werden, um die Zitzen mit einem Mittel zu besprühen.

Die Druckschrift EP 1 520 468 A1 beschreibt eine automatische Melkeinrichtung, in der aktuelle Positionsdaten für die einzelnen Zitzen ausgewertet werden, um entsprechende Positionssignale zu erzeugen. Gegebenenfalls werden die aktuellen Positionsdaten auf verwendet, die Position zur Benetzung einzelner Zitzen neu zu ermitteln und eine genaue Position anzufahren, an der dann nach Eintreffen an dieser Position ein entsprechendes Prozessfluid ausgeworfen wird.

Es besteht somit ein Bedarf beim automatisierten oder halbautomatisierten Melkvorgang, die Reinigung bzw. Desinfektion oder allgemein die Behandlung des Tiereuters vor und/oder nach dem Kontakt mit Melkbechern so zu verbessern, dass eine hohe Effizienz und eine gleichbleibende Qualität der Reinigungsvorgänge erreicht wird.

Generell stellt die vorliegende Erfindung Mittel bereit, mit denen eine Reinigung bzw. eine Behandlung der Zitzen eines Milchtieres vor und/oder nach dem Melkvorgang zumindest teilweise automatisch vorgenommen wird, wobei zumindest die Beaufschlagung bzw. die Benetzung, falls ein Aufbringen eines flüssigen Prozessfluids erforderlich ist, in automatisierter Weise erfolgt.

Insbesondere wird erfindungsgemäß die zuvor genannte Aufgabe gelöst durch eine Reinigungsanlage für Zitzen eines Milchtieres mit den Merkmalen des Anspruchs 1.

Die erfindungsgemäße Reinigungsanlage ist damit so ausgebildet, dass zumindest zwei [4], die für unterschiedliche Zwecke bei der Behandlung der Zitzen vorgesehen sind und damit in der Regel eine unterschiedliche Zusammensetzung aufweisen, automatisch auf relevante Bereiche der Zitze aufgebracht werden können. Vor dem Ausführen des eigentlichen Melkvorgangs und damit vor dem Anlegen der Melkbecher ist es wichtig, die Zitzen zu reinigen. Dafür kann eine spezielle Reinigungsflüssigkeit, im einfachsten Fall Wasser, verwendet werden, während nach dem Melkvorgang eine Nachbehandlung der Zitzen erfolgen sollte, die zum einen eine weitere mögliche Verschleppung von Keimen verhindern soll und zum anderen insbesondere der Pflege der zuvor beim Melkvorgang belasteten Zitzen dienen soll. Beispielsweise haben sich für die Nachbehandlung Mittel auf Basis von Milchsäure gut bewährt. Somit sind die Anwesenheit und das Eingreifen eines Bedieners zumindest beim Aufbringen der jeweiligen Prozessfluide nicht erforderlich, wodurch einerseits der gesamte Melkvorgang zeitlich besser steuerbar ist, da insgesamt die Anwesenheitszeit des Bedieners für jeden einzelnen Melkvorgang generell verkürzt werden kann und auch der gesamte Anteil an manueller Einwirkung auf den Melkvorgang reduziert wird. Ein weiterer Vorteil der automatischen Beaufschlagung der Zitzen besteht darin, dass bei jedem Reinigungsvorgang bzw. Behandlungsvorgang genau definierte Mengen der entsprechenden [4] aufgebracht werden, so dass einerseits sichergestellt ist, dass die für die jeweilige Reinigung bzw. Behandlung erforderliche Menge tatsächlich zum Einsatz kommt, aber andererseits keine Vergeudung der [4] erfolgt. Durch die Positioniereinrichtung werden die Beaufschlagung bzw. Benetzung der Zitzen ohne direkten Kontakt mit der Fluidausgabeeinrichtung bewerkstelligt, so dass eine Kontamination der Fluidausgabeeinrichtung in der Regel vermieden wird. Auf diese Weise wird eine Übertragung von Keimen von einem Tier zum anderen während des entsprechenden Reinigungsvorgangs weitestgehend vermieden. Erfindungsgemäß sind die nachfolgend genannten Prozessfluide Prozessflüssigkeiten.

Die Fluidausgabeeinrichtung weist etwa eine erste Ausgabeleitung, die gesteuert mit einer Quelle für das erste Prozessfluid verbindbar ist, und eine zweite Ausgabeleitung, die gesteuert mit einer Quelle für das zweite Prozessfluid verbindbar ist, auf. D.h., es sind zwei separate Ausgabeleitungen in der Fluidausgabeeinrichtung vorgesehen, so dass die beiden Prozessfluide über fast den gesamten Vorgang des Ausgebens hinweg getrennt behandelt werden können. Damit wird eine Vermischung der beiden Prozessfluide im Wesentlichen vermieden. In vorteilhaften Ausführungsformen ist dabei die Fluidausgabeeinrichtung mit einer geeigneten Ventileinrichtung für jede der separaten Ausgabeleitungen versehen, so dass nach erfolgtem Ausgabevorgang die jeweilige Ausgabeleitung strömungstechnisch verschließbar ist, wodurch beispielsweise bei einer Änderung der Betriebsposition der Fluidausgabeeinrichtung ein unerwünschtes Austreten der jeweiligen Prozessfluide vermieden werden kann. Ferner verfügt die Fluidausgabeeinrichtung über einen geeignet ausgebildeten Endbereich, etwa in Form einer oder mehrerer Auslassdüsen, so dass das jeweilige Prozessfluid unter gut definierten Bedingungen ausgeworfen wird. Dazu kann beispielsweise jede Ausgabeleitung separat über eine oder mehrere zugehörige Auslassdüsen verfügen, so dass auch in diesem Bereich der Fluidausgabeeinrichtung eine gegenseitige "Kontamination" der Prozessfluide verhindert wird. In anderen Ausführungsformen wird hingegen die gleiche Auslassdüse bzw. eine Gruppe von Auslassdüsen gemeinsam für das erste und das zweite Prozessfluid für das Auswerfen verwendet, wobei in der Regel die möglicherweise auftretende geringfügige Vermischung des auszuwerfenden Prozessfluids mit Resten des anderen Prozessfluids vernachlässigbar ist. Eine entsprechende Einrichtung, etwa ein Ventil, zum Verschluss der jeweiligen Ausgabeleitung kann dabei in einer entsprechenden Düse oder unmittelbar vor der Düse vorgesehen sein, um bei einer Lageänderung der Fluidausgabeeinrichtung nach erfolgter Ausgabe eines Prozessfluids ein weiteres Austreten zu vermeiden. Die Ausgabeleitungen ermöglichen ferner eine gesteuerte Verbindung mit einer entsprechenden Quelle für die Prozessfluide, was so zu verstehen ist, dass geeignete Mittel, in Form von Ventilen und/oder Pumpen und/oder Druckreservoiren vorgesehen sind, die einen Eintritt des entsprechenden Prozessfluids in gesteuerter Weise in die jeweilige Ausgabeleitung ermöglichen. Dabei umfasst die Steuerung des Zuführens des jeweiligen Prozessfluids zu der Ausgabeleitung in vorteilhaften Ausführungsformen die Einstellung genau definierter Betriebsparameter, so dass eine dosierte Menge des jeweiligen Prozessfluids unter gut definierten Druckbedingungen in die jeweilige Ausgabeleitung eingespeist wird. Dabei können die entsprechenden Betriebsparameter so festgelegt werden, dass auch die Bedingungen, die durch die Ausgabeleitung sowie eine mögliche Auslassdüse vorgegeben sind, mit berücksichtigt werden, um damit gut definierte Bedingungen bei der Benetzung der Zitzen zu gewährleisten, so dass eine gewünschte reinigende bzw. desinfizierende Wirkung erreicht wird, ohne dass eine Vergeudung der Prozessfluide stattfindet.

In anschaulichen Ausführungsformen kann die Steuerung der Verbindung der Ausgabeleitung mit der jeweiligen Quelle der Prozessfluide, unabhängig davon, ob eine einzelne Ausgabeleitung oder mehrere Ausgabeleitungen vorgesehen sind, so erfolgen, dass die Betriebsparameter bei Bedarf auch dynamisch variierbar sind, so dass gegebenenfalls präzise definierte Bedingungen, die sich jedoch für einzelne Ausgabevorgänge unterscheiden können, einstellbar sind.

In einer vorteilhaften Ausführungsform dienen das erste Prozessfluid zur Beaufschlagung der Zitzen vor dem Anlegen von Melkbechern und das zweite Prozessfluid zur Beaufschlagung der Zitzen nach dem Abnehmen der Melkbecher. In diesem Falle kann die erfindungsgemäße Reinigungsanlage in zwei Betriebssituationen eingesetzt werden, in denen insbesondere in semi-automatisierten Betrieben ansonsten die Anwesenheit und das Eingreifen eines Bedieners erforderlich sind. Wie eingangs erwähnt ist, ist die Einhaltung hoher hygienischer Standards eine wesentliche Voraussetzung, um einerseits den gesetzlichen Vorgaben bei der Produktion von Milch zu entsprechen, aber andererseits auch um eine hohe wirtschaftliche Effizienz des Betriebs zu erreichen. Dabei ist ein wesentlicher Aspekt die Reinigung der Zitzen vor dem Melkvorgang, so dass möglicherweise anhaftende Verschmutzungen an den Zitzen mit dem Inneren der Melkbecher bzw. der Zitzengummis möglichst nicht in Berührung kommen. Entsprechende Verschmutzungen ergeben sich typischerweise durch Kontakte der Zitzen mit dem Boden oder anderen Gegenständen, wenn sich das Tier im Stall oder im Freien bewegt oder ruht. Durch das automatisierte Aufbringen einer dosierten Menge des ersten Prozessfluids kann beispielsweise auch hartnäckiger Schmutz angelöst bzw. aufgeweicht werden, so dass beispielsweise bei einer manuellen Nachbehandlung eine wesentlich höhere Effizienz bei der Reinigung der Zitze jedoch bei geringerem Zeitaufwand durch den Bediener erreicht wird. Auch wird durch das Vorsehen einer automatisierten Beaufschlagung der Zitze vor dem Melkvorgang ein höheres Maß an genau definierter Reinigungseffizienz im Vergleich zu vollständig manuellen Reinigungsvorgängen erreicht, auch wenn anschließend noch ein gewisses Maß an manueller Nacharbeit angewendet wird.

Beispielsweise wird häufig beobachtet, dass insbesondere in Betrieben, in denen unter hohem Zeitdruck gearbeitet werden muss, die Vorreinigung der Zitzen vor dem Melkvorgang nur sehr kurz oder gar nicht und wenn, dann unter Verwendung des gleichen mechanischen Reinigungsmittels für viele einzelne Tiere durchgeführt wird, so dass weder die erforderlichen hygienischen Standards für den einzelnen Melkvorgang noch eine Verhinderung der Übertragung von Keimen von einem Tier zum anderen erreicht werden. Demgegenüber erfolgt erfindungsgemäß zumindest die Beaufschlagung der Zitzen mit dem Prozessfluid unter gut definierten Prozessbedingungen, ohne dass ein direkter Kontakt zwischen der Fluidausgabeeinrichtung und der Zitze hergestellt wird, so dass zumindest dieser Übertragungsweg für mögliche gegenseitige Kontaminationen ausgeschlossen ist. Durch die definierte Aufbringung des ersten Prozessfluids werden außerdem günstigere Bedingungen für eine mögliche nachfolgende mechanische Behandlung geschaffen, so dass beispielsweise beim mechanischen Abreiben von angelösten Verschmutzungen ein gut definierter Anteil an Prozessfluid vorhanden ist, der in der abgeriebenen Verschmutzung weiterhin wirksam sein kann, um eine Übertragung von Keimen zu unterdrücken.

In einer weiteren vorteilhaften Ausführungsform kann der Reinigungsvorgang vor dem Melkvorgang ausschließlich automatisch ausgeführt werden, wie dies beispielsweise nachfolgend detaillierter beschrieben ist.

Ferner wird das zweite Prozessfluid vorteilhafter Weise für eine Behandlung bzw. Desinfektion (Dippen) der Zitzen nach dem Melkvorgang verwendet, so dass ein Eindringen von Keimen in den Strichkanal nach dem unmittelbar vorher beendeten Melkvorgang möglichst vermieden wird. Die Benetzung der Zitzen nach dem Melkvorgang durch das Aufbringen des zweiten Prozessfluids findet dabei automatisch statt, so dass in bevorzugten Ausführungsformen in dieser Phase des Melkvorgangs kein manuelles Eingreifen eines Bedieners erforderlich ist. Insbesondere kann das entsprechende Tier nach Beendigung des Melkvorgangs ohne weitere Sichtung durch den Bediener entlassen werden, sofern keine Unregelmäßigkeiten während des vorhergehenden Melkvorgangs aufgetreten sind. Dadurch wird ebenfalls der gesamte Melkvorgang beschleunigt, ohne dass eine Beeinträchtigung der Eutergesundheit erfolgt. Vielmehr kann auch in diesem Falle durch die genau dosierte Benetzung der Zitzen ein hohes Maß an Effizienz der Nachbehandlung erreicht werden, ohne dass eine Vergeudung des zweiten Prozessfluids stattfindet.

Die Fluidausgabeeinrichtung weist einen Ausgabearm auf, der durch die Positioniereinrichtung zumindest an einer ersten Betriebsposition, in der der Ausgabearm Zugänglichkeit zu den Zitzen gewährt, und an mindestens einer zweiten Betriebsposition, in der die Zitzen mit dem ersten und/oder zweiten Prozessfluid beaufschlagbar sind, positionierbar ist. Die Verwendung eines Ausgabearms ermöglicht eine effiziente mechanische Überbrückung eines Teils der Strecke zwischen einer Quelle der Prozessfluide und den Zitzen, wobei, abhängig von dem gewünschten Grad an Positionierbarkeit, eine entsprechende mechanische Kopplung zu der Positioniereinrichtung dafür sorgt, dass die erste und die mindestens eine zweite Betriebsposition steuerbar angefahren werden können. Die mindestens eine zweite Betriebsposition ist dabei so zu verstehen, dass in dieser Position eine Benetzung bzw. Beaufschlagung aller Zitzen des infrage stehenden Tieres möglich ist. Dabei wird auch eine zweite oder mehrere zweite Positionen angefahren werden in Form einer kontinuierlichen Bewegung ohne speziell ausgeprägte Haltepositionen, so dass damit eine günstigere Verteilung des zweiten Prozessfluids zur Benetzung der Zitzen ermöglicht wird. Der Begriff "mindestens eine zweite Betriebsposition" beinhaltet eine kontinuierliche Bewegung des Ausgabearms in der Nähe der Zitzen, während welcher kontinuierlich oder in ununterbrochener Weise das zweite Prozessfluid ausgeworfen wird.

In der ersten Betriebsposition ist dabei der Ausgabearm so positioniert, dass Zugänglichkeit der Zitzen, beispielsweise für das Anlegen von Melkbechern, für das Abnehmen von Melkbechern, etwa in automatisierter Weise, für die Sichtkontrolle durch einen Bediener bzw. durch eine Bildaufnahmeeinrichtung, und dergleichen gegeben ist. In vorteilhaften Ausführungsformen ist dabei die erste Betriebsposition so ausgestaltet, dass eine Kontamination, etwa durch Exkremente der Tiere, die während der Anwesenheit des Tieres in dem Tieraufnahmebereich möglicherweise abgegeben werden, im Wesentlichen verhindert wird. Dazu kann beispielsweise eine geeignete Umhüllung vorgesehen werden, die zwar die Bewegungsmöglichkeit des Ausgabearms nicht beeinträchtigt, aber dennoch einen zuverlässigen Schutz vor herabfallenden Gegenständen und vor Trittbelastung bietet. In weiteren Ausführungsformen ist zusätzlich eine entsprechende Reinigungseinrichtung vorgesehen, die bei Bedarf oder regelmäßig die Außenflächen zumindest eines Teils der Fluidausgabeeinrichtung, etwa den Ausgabearm, reinigt, indem ein Fluid, etwa Wasser, und dergleichen eingestrahlt bzw. eingesprüht wird.

In einer weiteren anschaulichen Ausführungsform ist die Reinigungsanlage ferner ausgebildet, bei Überschreitung eines Schwellwerts einer mechanischen Einwirkung auf den sich in der mindestens einen zweiten Betriebsposition befindlichen Ausgabearm diesen zumindest temporär aus der zweiten Betriebsposition wegzubewegen. Auf diese Weise wird verhindert, dass eine Schädigung der Fluidausgabeeinrichtung erfolgt, wenn eine mechanische Einwirkung, etwa durch das in dem Tieraufnahmebereich vorhandene Tier erfolgt. Zu diesem Zweck können an sich bekannte Mittel in Verbindung mit der Fluidausgabeeinrichtung und/oder der Positioniereinrichtung eingesetzt werden, so dass eine Veränderung der Position bei Auftreten einer mechanischen Einwirkung möglich ist. Beispielsweise kann dazu an einer an sich mechanisch beweglichen Verbindungsstelle eine Feder oder ein dazu mechanisch äquivalentes Mittel vorgesehen werden, so dass aufgrund der Federkraft die gewünschte Lage durch aktivierte Antriebsmittel, etwa pneumatische Zylinder, Elektromotoren, et cetera, der Positioniereinrichtung eingenommen und eingehalten wird, jedoch bei Überschreiten des mechanischen Schwellwerts eine Änderung der Lage gegen die Federkraft erfolgen kann. In anderen Ausführungsvarianten kann diese gewünschte "mechanische Nachgiebigkeit" der Fluidausgabeeinrichtung in der mindestens einen zweiten Betriebsposition dadurch eingerichtet werden, dass die in der Positioniereinrichtung vorgesehenen Antriebsmittel entsprechend angesteuert werden, um eine Positionsänderung vorzunehmen, wenn der mechanische Schwellwert überschritten wird. Beispielsweise kann bei einem Elektromotor, der über eine geeignete mechanische Kopplung zumindest teilweise für die Positionierung der Fluidausgabeeinrichtung vorgesehen ist, das Auftreten eines zusätzlichen Kräftemoments erfasst und entsprechend ausgewertet werden, so dass dann eine darauf regierende Ansteuerung des Elektromotors erfolgt, die zu einer Lageänderung führt, um damit die extern einwirkende Kraft zu verringern. Ein diesbezüglicher Mechanismus, der eine Lageänderung zur Abschwächung einer extern einwirkenden Kraft vornimmt, kann in weiteren Ausführungsformen auch so eingerichtet sein, dass er in anderen Positionen wirksam ist. Beispielsweise kann eine extern einwirkende Kraft auch während der Bewegung von der ersten Betriebsposition in die zweite Betriebsposition auftreten, so dass auch in diesem Falle eine entsprechende durch passive und/oder oder aktive mechanische Mittel installierte "mechanische Nachgiebigkeit" eine Schädigung der Fluidausgabeeinrichtung und/oder der Positioniereinrichtung weitestgehend verhindert. Beispielsweise kann ein diesbezüglicher Mechanismus auch in der ersten Betriebsposition wirksam sein, oder die erste Betriebsposition ist ausreichend durch andere mechanische Mittel geschützt, um eine Schädigung durch mechanische Einwirkung des Tieres zu vermeiden.

In einer weiteren anschaulichen Ausführungsform ist die Fluidausgabeeinrichtung ferner ausgebildet, ein drittes Prozessfluid auszugeben, das zur Verringerung der Oberflächenbenetzung einer Zitze nach ihrer Beaufschlagung mit dem ersten oder dem zweiten Prozessfluid dient. Das dritte Prozessfluid kann also verwendet werden, um den Grad der Benetzung, der durch die Beaufschlagung mit dem ersten oder dem zweiten Prozessfluid hervorgerufen wird, zu reduzieren, so dass gut definierte Oberflächenbedingungen an der Zitze für die weitere Behandlung hergestellt werden. Beispielsweise kann das dritte Prozessfluid in Form eines Gasstroms bereitgestellt werden, der zu einer effizienten Trocknung der Zitzen führt. Dabei kann die Zufuhr des dritten Prozessfluids so erfolgen, dass keine nennenswerte unangenehme Empfindung für das Tier hervorgerufen wird. Beispielsweise kann ein Gasstrom in seiner Temperatur und seiner Auftrittsgeschwindigkeit so gesteuert sein, dass ein für das Tier angenehmes Gefühl entsteht, um damit eine unerwünschte plötzliche Bewegung oder Reaktion des Tieres zu vermeiden.

Die Verringerung der Benetzung an der Zitze ist beispielsweise besonders vorteilhaft bei einem vollständig automatisierten Reinigungsprozess unmittelbar vor dem Melkvorgang, wobei zunächst das erste Prozessfluid aufgebracht wird, um Verschmutzungen zu entfernen oder zumindest anzulösen und aufzuweichen. Die Zitzen können dann so mit dem dritten Prozessfluid und möglicherweise mit einem oder mehreren weiteren Prozessfluiden beaufschlagt werden, so dass gegebenenfalls zunächst eine Entfernung angelöster Verschmutzungsbereiche erfolgt, woraufhin dann eine effiziente Verringerung der Benetzung, d.h. eine Trocknung, der Zitzen bewerkstelligt wird. Auf diese Weise können dann die Melkbecher angelegt werden, ohne dass eine Reduzierung der Oberflächenhaftung der Zitzengummis an der Zitze hervorgerufen wird, wie dies der Fall wäre, wenn die Zitzen feucht sind. Bei Bedarf kann, wenn die Melkbecher manuell durch einen Bediener angelegt werden, eine sehr kurze manuelle Einwirkung auf die Zitzen erfolgen, so dass gegebenenfalls weitere Verschmutzungsteilchen mechanisch abgerieben werden, ohne dabei jedoch ein unerwünschtes Schmerzempfinden bei dem Tier auszulösen. Da dieser kurze manuelle Vorgang bei nahezu trockenem Zustand der Zitze erfolgt, ist auch eine mögliche Übertragung von Keimen von einem zum anderen Tier stark eingeschränkt, auch wenn das entsprechende, von dem Bediener verwendete Reinigungstuch oder andere mechanische Hilfsmittel zwischen den einzelnen Tieren nicht ausgetauscht wird.

Die Reduzierung der Oberflächenbenetzung durch das dritte Prozessfluid kann auch im Zusammenhang mit dem zweiten Prozessfluid vorteilhaft sein, das beispielsweise nach erfolgtem Melkvorgang aufgebracht wird. Durch die Trocknung zumindest von relativ großen Bereichen der Zitze kann damit eine unerwünschte Anhaftung von Verschmutzungen vermieden werden, wenn sich das Tier vom Tieraufnahmebereich hinaus bewegt.

In weiteren vorteilhaften Ausführungsformen können das dritte Prozessfluid oder auch weitere Prozessfluide in Form von anderen geeigneten Flüssigkeiten oder Gasen bereitgestellt werden, so dass sich ein hoher Grad an Flexibilität für die Ausgestaltung entsprechender Reinigungsprozesse der Zitzen erreichen lässt. Die Ausgabe des dritten Prozessfluids erfolgt dabei in anschaulichen Ausführungsformen durch eine individuelle Ausgabeleitung, während in anderen Fällen eine gemeinsame Ausgabeleitung oder die Ausgabeleitung eines anderen Prozessfluids Verwendung findet, wobei auch hier eine entsprechende Absaugung des zuvor verwendeten Prozessfluids aus einer gemeinsamen Ausgabeleitung stattfinden kann, wie dies bereits zuvor beschrieben ist, um eine Vermischung des dritten Prozessfluids mit einem der anderen Prozessfluide zu unterbinden, falls dies erforderlich ist.

In einer vorteilhaften Ausführungsform ist die Reinigungsanlage so ausgebildet, dass sie an dem Tieraufnahmebereich anbringbar ist, der zum Ausführen des Melkvorgangs vorgesehen ist. D.h., in dieser Ausführungsform wird die Reinigungsanlage unmittelbar an dem Melkstand vorgesehen, so dass eine Behandlung bzw. Reinigung der Zitzen an dem Ort erfolgt, an dem auch der Melkvorgang stattfindet und damit unmittelbar vor und/oder unmittelbar nach dem Melkvorgang erfolgen kann. Auf diese Weise wird eine Kontamination bzw. Verschmutzung des Euters, die beispielsweise beim Zugang zu einem Melkstand auftreten könnte, beim entsprechenden Reinigungsvorgang ebenfalls entfernt, was bei einer Behandlung in einem separaten Tieraufnahmebereich nicht gegeben ist, da sich dann das Tier noch zu dem aktuellen Melkstand bewegen muss. Der kritische Vorgang des Kontakts der Zitzen mit den Melkbechern erfolgt daher mit Zitzen, die unmittelbar vorher etwa durch das Beaufschlagen mit dem ersten Prozessfluid gereinigt sind, möglicherweise in Verbindung mit einer mechanischen Einwirkung eines Bedieners, so dass ein hoher hygienischer Standard erreicht werden kann. Eine entsprechende Behandlung in einem speziellen Tieraufnahmebereich, der nicht für den Melkvorgang dient, birgt stets die Gefahr, dass anschließend auf dem Weg zu dem eigentlichen Melkstand eine weitere Kontamination oder Verschmutzung auftreten kann. In ähnlicher Weise kann auch der Reinigungsvorgang bzw. Desinfiziervorgang (Dipp-Vorgang) unmittelbar nach Abnahme der Melkbecher ausgeführt werden, ohne dass das Tier zuvor den Weg zu einem speziell gestalteten Tieraufnahmebereich zurücklegen muss, so dass auch in diesem Falle höchste Effizienz erreicht wird. D.h., die Beaufschlagung mit dem zweiten Prozessfluid erfolgt unmittelbar nach Abnahme der Melkbecher, ohne dass die Möglichkeit einer Einwirkung von anderen Verschmutzungen möglich ist und auch die pflegende Wirkung unmittelbar nach der Abnahme der Melkbecher erfolgt. Ferner besitzt die Installation der erfindungsgemäßen Reinigungsanlage unmittelbar an dem Melkstand den Vorteil, dass das Tier nach dem Entlassen aus dem Melkstand keine weiteren Behandlungen über sich ergehen lassen muss, was insbesondere zu einem verbesserten Tierverkehr beiträgt. Ferner können separate Tieraufnahmebereiche zur Zitzenbehandlung eingespart werden, wodurch sich ein kompakterer Aufbau des Stalles verwirklichen lässt. In einer Ausführungsform ist die Reinigungsanlage an dem automatisierten Melkgerät angebracht, das für den betreffenden Melkstand vorgesehen ist. Auf diese Weise können die jeweiligen Ressourcen der einzelnen Komponenten gegenseitig vorteilhaft genutzt werden. Wenn etwa das Melkgerät schwenkbar ist, kann durch die mechanische Ankopplung der Reinigungsanlage an das Melkgerät der Schwenkmechanismus auch als Teil der Antriebskomponente der Reinigungsanlage genutzt werden, so dass sich dadurch der Gesamtaufbau vereinfacht. Weiterhin können bereits vorhandene Versorgungskomponenten des Melkgeräts, etwa Druckluftleitungen, Wasserleitungen, und dergleichen bei Bedarf auch für die Reinigungsanlage genutzt werden.

In einer bevorzugten Ausführungsform weist die Reinigungsanlage ferner eine Steuereinrichtung auf, die ausgebildet ist, die Ausgabe des ersten und des zweiten Prozessfluids in Abhängigkeit von einem Status des Tieraufnahmebereichs und/oder des Status des zu melkenden Tieres und/oder in Abhängigkeit tierspezifischer Daten des zu melkenden Tieres und/oder in Abhängigkeit eines eingespeisten Steuersignals und/oder in Abhängigkeit von aktuellen Bilddaten des zu melkenden Tieres zu steuern. In dieser Ausführungsform ist die Steuereinrichtung vorgesehen, die beispielsweise den Status des Tieraufnahmebereichs erfasst oder entsprechende Daten empfängt, die diesen Status kennzeichnen. Auf der Grundlage des daraus ermittelten Status führt die Steuereinrichtung die Steuerung der Reinigungsanlage derart aus, dass die Ausgabe des ersten und/oder des zweiten Prozessfluids als Folge des ermittelten Status erfolgt. Der Status des Tieraufnahmebereichs, insbesondere wenn dieser dem Melkstand entspricht, in welchem auch der Melkvorgang stattfindet, kann beispielsweise den aktuellen Zustand des Melkstands bei Eintritt des zu melkenden Tieres beschreiben. In fortschrittlichen Betrieben mit automatisiertem oder semi-automatisiertem Melkvorgang findet eine Zwischendesinfektion der Melkbecher zwischen den einzelnen Melkvorgängen statt, um einerseits den rechtlichen Vorgaben Rechnung zu tragen und andererseits auch die Qualität der Milch und die Tiergesundheit auf einem hohen Niveau zu halten. Dazu ist es in der Regel notwendig, die Melkbecher einer geeigneten Reinigungsprozedur zu unterziehen, die die Beaufschlagung mit zwei oder mehr Reinigungsmitteln erfordert und auch eine entsprechende zeitliche Einwirkung notwendig macht, so dass nach Beendigung eines vorhergehenden Melkvorgangs eine gewisse Zeitdauer abzuwarten ist, bevor die Melkbecher für einen weiteren Melkvorgang zur Verfügung stehen. Dabei sind Zeitintervalle von mehreren 10 s typischerweise erforderlich. Unter Berücksichtigung des aktuellen Zustands des Melkstands, d.h. beispielsweise der Zustand der Melkbecher, kann somit die Steuereinrichtung der erfindungsgemäßen Reinigungsanlage für die Zitzen einen geeigneten Zeitpunkt für den Beginn der Beaufschlagung mit dem ersten Prozessfluid ermitteln, nachdem das nächste zu melkende Tier den Melkstand betreten hat. In anderen Fällen erfordert beispielsweise die Reinigung der Zitzen auch die mechanische Behandlung durch einen Bediener, der jedoch gegebenenfalls noch nicht vor Ort ist oder auch nicht innerhalb einer vorhersehbaren Zeitdauer an dem betreffenden Tieraufnahmebereich anwesend sein kann, so dass in diesem Falle die Steuereinrichtung ebenfalls auf der Grundlage der Statusinformation einen geeigneten Zeitpunkt ermittelt, an welchem die Beaufschlagung der Zitzen mit dem jeweiligen Prozessfluid erfolgen soll. Wenn etwa nach der Beaufschlagung der Zitzen mit dem ersten Prozessfluid unmittelbar eine mechanische Einwirkung durch den Bediener erfolgen soll, um eine möglichst hohe Effizienz des Reinigungsvorgangs zu erzielen, löst die Steuereinrichtung die Ausgabe des ersten Prozessfluid nur dann aus, wenn die Statusinformationen angeben, dass der Bediener vor Ort ist oder innerhalb einer kurzen Zeitdauer, die im Voraus einstellbar ist, eintrifft.

In anderen Reinigungsprozeduren kann es erforderlich sein, dass eine gewisse Einwirkdauer abzuwarten ist, bevor eine weitere Behandlung, durch den Bediener oder durch die Reinigungsanlage selbst, auszuführen ist. In diesem Falle kann die Steuereinrichtung die Ausgabe des entsprechenden Prozessfluids so disponieren, dass eine unnötige Wartezeit des Bedieners an dem entsprechenden Tieraufnahmebereich vermieden wird. Dies kann beispielsweise dadurch bewerkstelligt werden, dass aus der Statusinformation des Tieraufnahmebereichs oder anderer Tieraufnahmebereiche die Position des Bedieners ermittelt wird, so dass daraus beispielsweise eine Mindestzeitdauer berechnet werden kann, die zum Zurücklegen der Strecke zwischen der aktuellen Position des Bedieners und der Position des infrage stehenden Tieraufnahmebereichs erforderlich ist. Ferner kann die Steuereinrichtung, gegebenenfalls unter Berücksichtigung der aktuellen Position des Bedieners, diesem eine Zeitangabe zukommen lassen, um einen Zeitpunkt festzulegen, an welchem die Anwesenheit des Bedieners erforderlich ist. Wenn die Einhaltung dieses Zeitpunkts aufgrund des Status des Bedieners, da dieser beispielsweise an einem weit entfernten Tieraufnahmebereich etwa mit dem Anlegen von Melkbechern beschäftigt ist, nicht möglich ist, kann die Steuereinrichtung die Ausgabe des entsprechenden Prozessfluids entsprechend zeitlich verschieben und einen erneuten gewünschten Zeitpunkt für die Anwesenheit des Bedieners ausgeben.

Bei einer vollständig automatisierten Reinigung der Zitzen vor dem Melkvorgang kann die Steuereinrichtung diesen Vorgang ebenfalls in Abhängigkeit von dem aktuellen Status des Tieraufnahmebereichs disponieren, der für den Melkvorgang zu verwenden ist. D.h., wenn beispielsweise die Reinigungsanlage an dem Melkstand vorgesehen ist, kann der Status der Melkbecher-Zwischendesinfektion von der Steuereinrichtung ausgewertet werden, so dass sich ein geeigneter Zeitpunkt für den vollautomatisierten Reinigungsprozess ergibt, wodurch sichergestellt ist, dass die Wartezeit nach abgeschlossenem Reinigungsvorgang und dem Anlegen der Melkbecher möglichst kurz ist. Dazu kann ebenfalls, wie zuvor erläutert ist, auch der Status des Bedieners ausgewertet werden, wenn dieser für das Anlegen der Melkbecher erforderlich ist. In anderen Fällen, in denen die Reinigung der Zitzen in einem separaten Tieraufnahmebereich vor dem Melkvorgang stattfindet, kann die Steuereinrichtung den Status der Tieraufnahmebereiche ermitteln, die die für einen nachfolgenden Melkvorgang infrage kommen, so dass daraufhin ein geeigneter Zeitpunkt für die Beaufschlagung der Zitzen mit dem entsprechenden Prozessfluid aus den Statusdaten der Tieraufnahmebereiche festgelegt werden kann.

Die Steuereinrichtung ist ferner alternativ oder zusätzlich so ausgebildet, dass auch der Status des zu melkenden Tieres bzw. des bereits gemolkenen Tieres ermittelt oder erhalten und ausgewertet wird, um die Ausgabe des ersten und/oder des zweiten Prozessfluids zu veranlassen. Der Status des aktuell zu behandelnden Tieres kann beispielsweise Angaben darüber enthalten, ob eine besonders intensive Einwirkung des ersten und/oder des zweiten Prozessfluids erforderlich ist aufgrund des aktuellen Gesundheitszustands des Tieres, dem aktuellen Verschmutzungsgrad, und dergleichen. Der Status des aktuell zu behandelnden Tieres kann dabei einen aktuellen Zustand des Tieres beschreiben, der beispielsweise nicht oder noch nicht in entsprechenden tierspezifischen Daten enthalten ist, so dass eine sehr dynamische Anpassung der Ausgabe des ersten und/oder des zweiten Prozessfluids durch Auswertung des Status durch die Steuereinrichtung möglich ist.

Alternativ oder zusätzlich zur Auswertung der zuvor angegebenen Statusinformationen im Hinblick auf den Tieraufnahmebereich, den Bediener, das zu melkende Tier oder das gemolkenen Tier werden auch tierspezifische Daten von der Steuereinrichtung verwendet, um die Ausgabe der Prozessfluide geeignet zu steuern. Die tierspezifischen Daten werden der Steuereinrichtung zugeleitet, beispielsweise von einem übergeordneten Steuerungssystem, das den Tierverkehr oder generell die Tierverwaltung steuert, oder entsprechende tierspezifische Daten werden von der Steuereinrichtung angefordert, sobald Kenntnis über die Identität des zu behandelnden Tieres vorliegt. Die Identifizierung des zu behandelnden Tieres erfolgt beispielsweise durch ein geeignetes Tiererkennungssystem, das mit einem übergeordneten Steuerungssystem oder der Steuereinrichtung in Verbindung steht und damit die erforderliche Information für die Steuereinrichtung bereitstellen kann. Die mit der Tierkennung verknüpfte tierspezifische Information wird dann gegebenenfalls ausgewertet, etwa im Hinblick auf eine mögliche Dosierung eines Prozessfluids, im Hinblick auf eine Verteilung des Prozessfluids aufgrund der individuellen Euterform und Eutergröße, und dergleichen. Ferner können die tierspezifischen Daten auch gegebenenfalls das Ansprechverhalten des Tieres auf die Behandlung beinhalten, so dass damit auch eine Steuerung der Intensität der Behandlung, beispielsweise in Form der Ausgabemenge und der Zeitdauer, durch die Steuereinrichtung erfolgen kann.

Zusätzlich oder alternativ zu den zuvor genannten Informationen, die von der Steuereinrichtung ausgewertet werden können, um die Ausgabe der Prozessfluide zu steuern, ist die Steuereinrichtung auch ausgebildet, ein oder mehrere eingespeiste Steuersignale für die Ausgabe der Prozessfluide auszuwerten. Beispielsweise kann ein eingespeistes Steuersignal ein von einem Bediener durch Fernübertragung oder durch unmittelbare Eingabe an der Reinigungsanlage übertragenes Signal sein, das für die Steuerung der Ausgabe der Prozessfluide durch die Steuereinrichtung verwendet wird.

Ferner ist die Steuereinrichtung alternativ oder zusätzlich zu den Gestaltungsformen, wie sie zuvor beschrieben sind, ausgebildet, Bilddaten aufzunehmen bzw. zu empfangen und diese auszuwerten, um damit Informationen für die Steuerung der Prozessfluide zu erzeugen. Zu diesem Zweck können an einer geeigneten Stelle innerhalb des Bereichs, in welchem der Tierverkehr stattfindet, eine oder mehrere Bildaufnahmeeinrichtungen installiert sein, die Bilddaten erzeugen. Beispielsweise kann der Bereich des Euters eines zu behandelnden Tieres durch die Bildaufnahmeeinrichtung aufgenommen werden, wobei durch die Steuereinrichtung oder durch eine nachgeordnete Bildverarbeitungseinrichtung eine Auswertung im Hinblick auf den Grad der Verschmutzung erfolgen kann. Zu diesem Zweck können gegebenenfalls einfach erkennbare Merkmale in einem entsprechenden Algorithmus erkannt werden, um beispielsweise eine "extreme" Verschmutzung, die eine besondere Art der Euterbehandlung erfordert, von einer "normalen" Verschmutzung zu unterscheiden. Die Bestimmung geeigneter Unterscheidungsmerkmale und die Implementierung in entsprechende Algorithmen, zum Beispiel Kantenerkennungsalgorithmen, die Erkennung farblich stark unterschiedlicher Bereiche, et cetera, kann dabei auf bekannten etablierten Bildverarbeitungsprozeduren beruhen.

Die Aufnahme von Bilddaten und deren Bereitstellung und Bearbeitung können auch zur Ermittlung der Identität eines zu behandelnden Tieres verwendet werden, wobei ebenfalls automatisierte Bilderkennungsalgorithmen zur Anwendung kommen. Bei Bedarf können einzigartige Markierungen an geeigneten Positionen an dem Tier vorgesehen werden, beispielsweise in Form einer Zahl, die aufgemalt oder anderweitig aufgedruckt ist, einer Ohrmarke, die ohnehin an jedem Tier befestigt ist, und dergleichen.

In einer weiteren vorteilhaften Ausführungsform ist die Steuereinrichtung ferner ausgebildet, die Positioniereinrichtung zu veranlassen, die mindestens eine zweite Betriebsposition unter Auswertung der Bilddaten des zu melkenden oder gemolkenen Tieres und/oder unter Anwendung von Positionsdaten des zu melkenden oder gemolkenen Tieres in dem Tieraufnahmebereich und/oder unter Anwendung der tierspezifischen Daten anzufahren.

Bei Verwendung der Bilddaten des zu melkenden oder gemolkenen Tieres, das als nächstes mit dem ersten und/oder dem zweiten Prozessfluid zu behandeln ist, ist eine sehr effiziente Ansteuerung der Positioniereinrichtung durch die Steuereinrichtung gewährleistet. Beispielsweise können die Bilddaten so aufgenommen werden, dass die Position des zu behandelnden Tieres in Bezug auf den Tieraufnahmebereich aus den Bilddaten durch geeignete Bildverarbeitungsprozeduren extrahiert werden kann, um damit eine genauere Festlegung der zweiten Betriebsposition zu gewährleisten. Beispielsweise wird eine Bildaufnahmeeinrichtung so positioniert, dass in dem infrage stehenden Tieraufnahmebereich zumindest das Euter des Tieres in Relation zu zumindest einem Teil des Tieraufnahmebereich dargestellt ist, so dass durch gut bekannte Bildverarbeitungsalgorithmen die Position des Euters in Bezug zu dem Tieraufnahmebereich und damit auch in Bezug zu der Reinigungsanlage ermittelt werden kann. Durch die präzise Festlegung der einen oder mehreren zweiten Betriebspositionen auf der Grundlage der Bilddaten kann die Steuereinrichtung nicht nur die Positioniereinrichtung veranlassen, die zuvor genau ermittelten Positionen anzufahren, sondern diese Positionen können so festgelegt werden, dass nur eine minimale Menge an Prozessfluid ausgegeben werden muss, wobei dennoch eine erforderliche Wirkung sichergestellt ist. Bei Bedarf können die Bilddaten auch nach erfolgter Ausgabe oder während der Ausgabe entsprechend ausgewertet werden, um den Erfolg der Positionierung und der von der Steuereinrichtung verwendeten Prozessparameter, etwa beispielsweise Druck der Prozessflüssigkeit bei der Ausgabe, zu ermitteln. Wenn beispielsweise nach erfolgter Ausgabe einer Prozessflüssigkeit die durchgeführte Bildauswertung keinen gewünschten Grad an Benetzung ergibt, kann die Steuereinrichtung einen oder mehrere Prozessparameter entsprechend verändern. Dazu können beispielsweise für mehrere Auswerteergebnisse der Bildverarbeitung zugehörige Parameterwerte, etwa für den Druck, die Menge, und dergleichen der jeweiligen Prozessflüssigkeit in einer Tabelle abgelegt sein, um damit bei der nächsten Ausgabe oder bei einer Wiederholung der Ausgabe die gewünschte Benetzung zu erreichen.

In einer weiteren Variante ist die Steuereinrichtung ausgebildet, zusätzlich oder alternativ zur Verwendung von Bilddaten, andere Positionsdaten auszuwerten, die die Position des zu behandelnden Tieres angeben. Beispielsweise kann die Fluidausgabeeinrichtung entsprechende Mittel aufweisen, um die Position des Tieres innerhalb des Tieraufnahmebereichs zu bestimmen, beispielsweise in Form von Lichtschranken, kapazitiven Näherungssensoren, Näherungssensoren auf Basis elektromagnetischer Strahlung, Ultraschall-Sensoren, und dergleichen. In anderen Ausführungsbeispielen können entsprechende Positionssensor unabhängig von der Fluidausgabeeinrichtung vorgesehen sein, um beispielsweise den Tierverkehr und/oder den Melkvorgang auf der Grundlage der gewonnenen Positionsdaten zu steuern. In diesem Falle wird zumindest ein relevanter Teil der Positionsdaten, der der Position des zu behandelnden Tieres in dem infrage stehenden Tieraufnahmebereich entspricht, der Steuereinrichtung zugeleitet, die diese Positionsdaten direkt verwerten oder entsprechend verarbeiten kann, um daraus geeignete Koordinaten für die Ansteuerung der Positioniereinrichtung zu erzeugen. Beispielsweise können die Positionsdaten im Wesentlichen die Größe, die Gestalt und die grobe Position des infrage stehenden Tieres angeben, so dass aufgrund dieser Angaben geeignete Positionen für die Fluidausgabeeinrichtung berechnet werden können. Auf diese Weise wird eine ausgeprägte Falschausgabe der Prozessfluide vermieden.

In weiteren Ausführungsformen werden alternativ oder zusätzlich zu den Bilddaten und/oder Positionsdaten tierspezifische Daten von der Steuereinrichtung verwertet, um die eine oder mehreren zweiten Betriebspositionen zu bestimmen oder deren Genauigkeit zu verbessern. Die tierspezifischen Daten können beispielsweise Angaben über die physiologischen Gegebenheiten des betreffenden Tieres enthalten, die wiederum zur Gewinnung genauerer Koordinaten für die Positioniereinrichtung verwendet werden können. In einem Ausführungsbeispiel sind insbesondere die Positionen des Euters und/oder der einzelnen Zitzen in den tierspezifischen Daten codiert, so dass diese verwendet oder herausgelöst werden können von der Steuereinrichtung bei der Berechnung geeigneter Zielkoordinaten für die Fluidausgabeeinrichtung. Die tierspezifischen Daten können beispielsweise auf ein tierinternes Referenzsystem Bezug nehmen, das wiederum durch zusätzliche Positionsdaten und/oder Bilddaten in Bezug auf den Tieraufnahmebereich festgelegt werden kann. Beispielsweise kann eine Bildverarbeitung auf der Grundlage von Bilddaten, die einen geeigneten Referenzpunkt enthalten, beispielsweise eine markante Kennzeichnung, oder dergleichen, diesen Referenzpunkt zu dem Tieraufnahmebereich in Beziehung setzen, so dass ausgehend von der durch die Bilddaten ermittelten Referenz und unter Berücksichtigung der tierspezifischen Daten auch genaue Angaben über die Lage des Euters bzw. der Zitzen durch die Steuereinrichtung ermittelt werden können. Beispielsweise kann ein entsprechender markanter Referenzpunkt an einer geeigneten Stelle des Tieres, beispielsweise auf dessen Rücken, aufgebracht werden, so dass die Bildaufnahmeeinrichtung zur Erzeugung der Bilddaten an einer Stelle oberhalb des Tieraufnahmebereich angebracht werden kann, wodurch eine Verschmutzung oder Beschädigung der Bildaufnahmeeinrichtung während des Betriebs nahezu ausgeschlossen ist. Selbstverständlich können entsprechende Referenzzeichen an dem Tier auch an anderen Stellen angebracht werden, so dass die entsprechende Bildaufnahmeeinrichtung in geeigneter Weise so vorzusehen ist, dass diese Referenzzeichen in Verbindung mit markanten Bereichen des Tieraufnahmebereich aus den Bilddaten extrahiert werden können.

Die tierspezifischen Daten können auch mit anderen Arten von Positionsdaten, die durch andere Sensoren gewonnen werden, verwertet werden, wie dies zuvor beschrieben ist. Beispielsweise kann mit einer geeigneten Anordnung aus nur wenigen Lichtschranken oder mittels einem oder wenigen anderen Sensoren relativ genau die Position des Tieres als Ganzes in Bezug zu dem Tieraufnahmebereich bestimmt werden, woraufhin aus dem tierspezifischen Daten dann genauere Koordinaten für das Euter bzw. die Zitzen extrahiert werden.

In einer vorteilhaften Ausführungsformerfolgen dabei das erste Benetzen und das zweite Benetzen ohne einen Positionswechsel des Milchtieres, so dass sich insbesondere im Hinblick auf das Aufbringen des zweiten Prozessfluids eine unmittelbar nach dem Abnehmen der Melkbecher einsetzende Wirkung des zweiten Prozessfluids ergibt.

In einer weiteren vorteilhaften Ausführungsform erfolgen das erste und/oder zweite Benetzen an der mindestens einen zweiten Betriebsposition so, dass eine kontinuierliche Bewegung während der Ausgabe des ersten oder zweiten Prozessfluids ausgeführt wird. Dadurch lässt sich eine präzise und ausreichende Benetzung der Zitzen erreichen. Beispielsweise kann eine kontinuierliche Bewegung in der Nähe der Zitze durch eine mechanische Kurvenscheibe bzw. Kulisse erreicht werden, wodurch mit einfachem Aufbau eine hohe Reproduzierbarkeit des Bewegungsablaufs gewährleistet ist.

In einer vorteilhaften Ausführungsform umfasst das Verwenden von Positionsdaten des Milchtieres zum Anfahren der mindestens einen zweiten Betriebsposition und/oder zum Ausgeben des ersten oder zweiten Prozessfluids an der mindestens einen zweiten Betriebsposition. Wie bereits zuvor erläutert ist, können geeignete Positionsdaten durch die Reinigungsanlage selbst oder durch entsprechende andere verfügbare Sensoren erfasst und entsprechend ausgewertet werden, um damit die eine oder die mehreren zweiten Betriebspositionen anzufordern oder eine entsprechende kontinuierliche Bahn in der Nähe der Zitzen zu erzeugen. Auch kann die Ausgabe des ersten oder des zweiten Prozessfluids auf der Grundlage der Positionsdaten zu erfolgen, dass bei möglichst kleiner Menge der auszugebenden Prozessfluide eine gewünschte ausreichende Benetzung aller Zitzen erreicht wird.

In einer weiteren vorteilhaften Ausführungsform umfasst das Verwenden von tierspezifischen Daten zum Anfahren der mindestens einen zweiten Betriebsposition und/oder zum Ausgeben des ersten oder zweiten Prozessfluids an der mindestens einen zweiten Betriebsposition. Somit kann zusätzlich oder alternativ zur Verwendung von Positionsdaten auch die Verwendung von tierspezifischen Daten zur Steigerung der Effizienz des gesamten Reinigungsvorgangs oder der Behandlung der Zitzen ausgenutzt werden. Entsprechende tierspezifische Daten können etwa Angaben über physiologische Besonderheiten der Zitzen beinhalten, so dass damit die Positionierung der Fluidausgabeeinrichtung an der mindestens einen zweiten Betriebsposition optimiert werden kann.

In einer weiteren nicht erfindungsgemäßen anschaulichen Ausführungsform umfasst das Verfahren das Beaufschlagen der Zitzen mit einem dritten Prozessfluid an der mindestens einen zweiten Betriebsposition, so dass auch komplexere Reinigungsvorgänge oder Behandlungen durchgeführt werden können.

Insbesondere dient in einer anschaulichen Ausführungsform das dritte Prozessfluid zur Reduzierung der Benetzung der zuvor mit dem ersten oder zweiten Prozessfluid benetzen Zitzen. Damit kann beispielsweise eine Trocknung erreicht oder zumindest beschleunigt werden, so dass die Zitzen schneller für die weitere Behandlung verfügbar sind. Beispielsweise kann günstig sein, vor dem Anlegen der Melkbecher eine Trocknungsvorgang auszuführen.

In einer vorteilhaften Ausführungsform ist zumindest das zweite Prozessfluid zur Nachbehandlung der Zitze nach dem Melkvorgang geeignet. Wie bereits erläutert ist, sind die Zitzen insbesondere nach der Belastung durch den Melkvorgang empfindlich und sollten mit einem Mittel beaufschlagt werden, dass sowohl eine pflegende Wirkung als auch eine gewisse desinfizierende Wirkung entfaltet. Auf diese Weise kann der automatisierte Melkvorgang noch besser dem natürlichen Saugvorgang des Kalbs angepasst werden, in welchem in einer Endphase des Saugvorgangs eine pflegende und desinfizierende Wirkung durch Änderungen des Saugvorgangs und eine Änderung der Milchzusammensetzung erreicht wird. Beispielsweise können Mittel auf der Grundlage von Milchsäure für diesen Zweck eingesetzt werden.

Weitere vorteilhafte Ausführungsformen, Aufgaben und Vorteile der vorliegenden Erfindung gehen aus der weiteren detaillierten Beschreibung sowie aus den angefügten Patentansprüchen hervor.

Weitere anschauliche Ausführungsformen werden nunmehr detaillierter mit Bezugnahme zu den begleitenden Zeichnungen beschrieben, in denen:
Figur 1a schematisch eine Draufsicht auf einen Bereich eines milchproduzierenden Betriebs zeigt, wobei mehrere Tieraufnahmebereiche in Form von Melkständen vorhanden sind, um einen effizienten Melkvorgang für eine Vielzahl von Tieren unter Anwendung der erfindungsgemäßen Reinigungsanlage zu ermöglichen,
Figur 1b schematisch eine Seitenansicht eines einzelnen Melkstands zeigt, in denen die Reinigungsanlage für Zitzen in einer ersten Betriebsposition dargestellt ist,
Figur 1c schematisch den Melkstand zeigt, wenn die Reinigungsanlage für die Zitzen in einer zweiten Betriebsposition zur Beaufschlagung der Zitzen mit einem ersten und/oder einem zweiten Prozessfluid ist,
Figuren 1d bis 1f schematisch eine Abfolge der Anwendung der Reinigungsanlage während eines Melkvorgangs zeigen, wobei das erste Prozessfluid vor dem Melkvorgang und das zweite Prozessfluid nach dem Melkvorgang aufgebracht wird, um eine Kontamination zwischen verschiedenen Tieren zu minimieren und die Tiergesundheit und damit den Ertrag der einzelnen Tiere auf einem hohen Niveau zu halten,
Figuren 2a bis 2c schematisch verschiedene Ausführungsvarianten der Fluidausgabeeinrichtung darstellen, um die Vielfalt möglicher Gestaltungsformen aufzuzeigen und
Figur 3 schematisch einen Teil der Betriebsumgebung zeigt, wobei die Reinigungsanlage mit einer Steuereinrichtung versehen ist, die auf der Grundlage diverser Eingangsdaten und Signale die Fluidausgabeeinrichtung/oder die Positionierung der Fluidausgabeeinrichtung steuert.

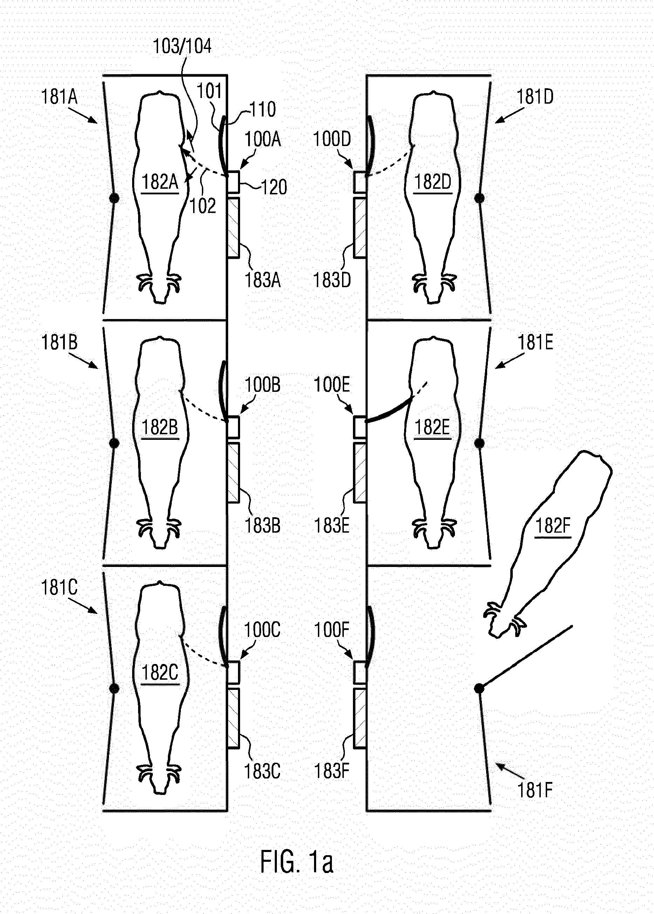

Figur 1a zeigt schematisch eine Draufsicht einer betrieblichen Umgebung 180 eines milchproduzierenden Betriebs, in welchem insbesondere Kühe, aber auch andere Milchtiere, insbesondere beim Melken so verwaltet werden, dass ein möglichst hoher Durchsatz bei geringem Personalaufwand und hohem Ertrag erreichbar ist. In der dargestellten Ausführungsform sind diverse Tieraufnahmebereiche 181A,...,181F in einer geeigneten Anordnung gezeigt, um damit mehrere Tiere 182A,...,182F parallel zu melken. In der dargestellten Variante sind die Tieraufnahmebereiche 181A,...,181F in einer doppelreihigen linearen Anordnung vorgesehen, wobei sich ein Bediener zwischen den beiden Reihen bewegen kann. Diese Anordnung ist auch als Auto-Tandem bekannt.

Es sollte jedoch beachtet werden, dass die vorliegende Erfindung nicht auf eine spezielle Anordnung der Tieraufnahmebereiche festgelegt ist. Insbesondere kann die erfindungsgemäße Reinigungsanlage für Zitzen auch in einer Melkstandanordnung eingesetzt werden, die allgemein als Fischgrät-Anordnung bekannt ist, in der mehrere Melkstände als schräge Anordnung vorgesehen sind. Auch sind in der Milch erzeugenden Industrie so genannte Karussell-Melkanordnungen in Verwendung, in denen eine Vielzahl von Melkständen auf einer rotierenden Plattform aufgebaut sind, die dann mit entsprechenden Tieren aufgefüllt werden. Auch in diesen Melkständen kann die erfindungsgemäße Reinigungsanlage effizient eingesetzt werden.

In der vorteilhaften Ausführungsform, die in Figur 1a gezeigt ist, sind die Bereiche 181A,...,181F somit Melkständen, in denen mithilfe geeigneter automatisierter oder semiautomatisierter Melkgeräte, die schematisch als 183A,...,183F dargestellt sind, ein Melkvorgang durchführbar ist, in welchem zumindest der Milchentzug automatisch erfolgt. Ferner ist in jedem Tieraufnahmebereich eine entsprechende Reinigungsanlage 100A,...,100F vorgesehen, so dass in jedem Tieraufnahmebereich eine automatisierte Ausgabe des ersten und/oder des zweiten Prozessfluids erfolgen kann, wobei dies unmittelbar vor und/oder unmittelbar nach einem Melkvorgang stattfindet, ohne dass eine Positionsänderung des jeweiligen Tieres erforderlich ist. Dadurch kann gegebenenfalls die Effizienz bei der Aufrechterhaltung der Tierges und heit und der Qualität der Milch erhöht werden, wie dies auch zuvor angegeben ist, während auch gleichzeitig die Steuerung der gesamten Melkvorgänge und des Tierverkehrs unter Berücksichtigung der automatisierten Ausgabe der Prozessfluide stattfinden kann.

Die Reinigungsanlagen 100A,..., 100F weisen jeweils eine Positioniereinrichtung 120 auf, die geeignet ausgebildet ist, eine Fluidausgabeeinrichtung 110 so zu positionieren, dass eine zielgenaue Ausgabe der Prozessfluide möglich ist, jedoch eine Störung des sonstigen Betriebsablaufs in dem jeweiligen Tieraufnahmebereich vermieden wird. Dazu ist die Positioniereinrichtung 120 unter anderem ausgebildet, die Fluidausgabeeinrichtung 110 an eine erste Betriebsposition 101 zu verfahren und an dieser zu halten, in der die erforderliche Zugänglichkeit zu dem Euter des jeweiligen Tieres für den Bediener oder für eine automatisierte Vorrichtung der Melkgeräte gegeben ist. Ferner ist die Positioniereinrichtung 120 so ausgebildet, dass die Fluidausgabeeinrichtung 110 an mindestens eine zweite Betriebsposition 102 gebracht werden kann, in der eine Beaufschlagung des Euters bzw. der Zitzen des Tieres mit einem jeweiligen Prozessfluid möglich ist. Zu beachten ist, dass auch mehrere zweite Betriebspositionen, die als 103/104 angegeben sind, angefahren werden können, falls dies für eine genauere Abgabe der Prozessfluide geeignet ist. Insbesondere beinhaltet die mindestens eine zweite Betriebsposition auch eine sich kontinuierlich verändernde Position, wobei das entsprechende Prozessfluid kontinuierlich ausgegeben wird, wie dies auch bereits zuvor erläutert ist. Insbesondere wird ein hoher Grad an Flexibilität bei der Gestaltung des Melkprozesses und insbesondere bei der Vorbehandlung und/oder Nachbehandlung der Tiere dadurch erreicht, dass die Reinigungsanlage mindestens zwei unterschiedliche Prozessfluide in gesteuerter Weise ausgeben kann.

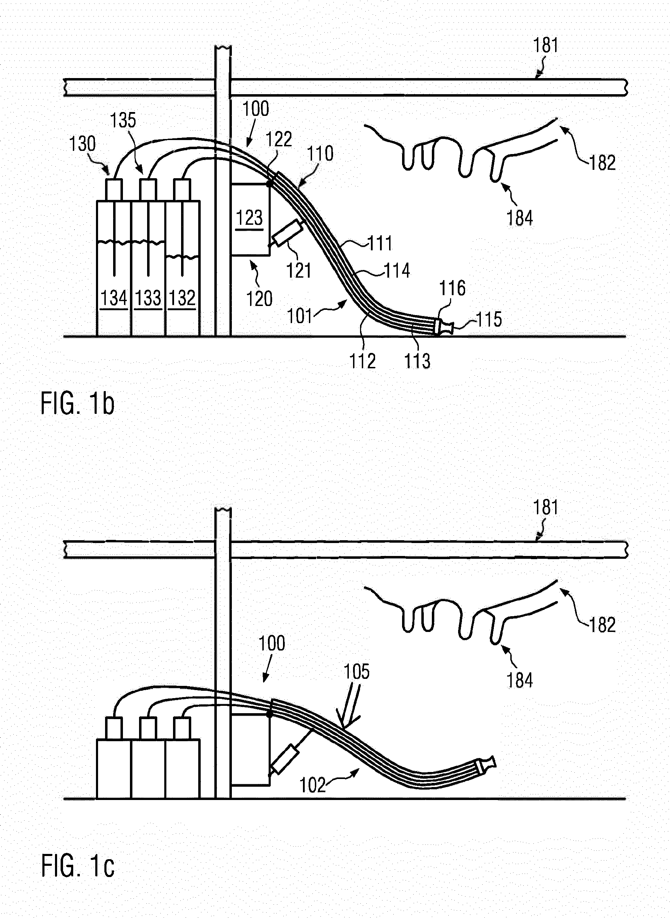

Figur 1b zeigt schematisch eine Seitenansicht eines Tieraufnahmebereich, der mit 181 bezeichnet ist, und in welchem ein Tier 182 anwesend ist, dessen Zitzen 184 zu einem geeigneten Zeitpunkt innerhalb des Bereichs 181 mit einem ersten Prozessfluid 132 und einem zweiten Prozessfluid 133 zu beaufschlagen bzw. zu benetzen sind. Wie zuvor erläutert ist, ist dabei in vorteilhaften Ausführungsformen der Tieraufnahmebereich 181 ein Melkstand, in welchem auch ein Melkvorgang stattfindet, wobei der Einfachheit halber ein entsprechendes Melkgerät nicht dargestellt ist. In diesem Falle ist eine Reinigungsanlage 100 individuell für jeden Melkstand vorgesehen, so dass die entsprechende Ausgabe der Prozessfluide unmittelbar vor und/oder nach einem Melkvorgang erfolgen kann. In anderen Ausführungsvarianten ist der Tieraufnahmebereich 181 ein Bereich, in welchem kein Melkvorgang stattfindet, sondern beispielsweise eine Behandlung vor und/ oder nach einem Melkvorgang oder auch zu einem anderen Zeitpunkt stattfinden.

In der gezeigten Ausführungsvariante umfasst die Reinigungsanlage 100 die Positioniereinrichtung 120, die zumindest eine Basiseinheit 123 aufweist, die mechanisch an dem Aufnahmebereich 181 fixiert ist und bei Bedarf auch weitere Komponenten, etwa elektronische Steuerungskomponenten, und dergleichen aufweist. Ferner sind mechanische Komponenten 122 vorgesehen, beispielsweise in Form von Gelenken und dergleichen, so dass die Fluidausgabeeinrichtung 110 in Bezug auf die Basiseinheit 123 mittels geeigneter Aktoren 121 bewegbar ist. In der dargestellten Ausführungsform weist die Fluidausgabeeinrichtung 110 einen Ausgabearm 111 auf, der in Länge und Form so gestaltet ist, dass beispielsweise durch eine einzelne Bewegung die Fluidausgabeeinrichtung 110 von der ersten Betriebsposition 101, in der die Zugänglichkeit zu den Zitzen 184 bewahrt bleibt und die Figur 1b gezeigt ist, in eine zweite Betriebsposition, die in Figur 1c mit 102 angegeben ist, verfahren werden kann. Eine geeignete Länge und Gestalt des Ausgabearms 111 hängt von den Gegebenheiten in dem Tieraufnahmebereich 181 ab. In einigen Ausführungsformen ist die Form und die Länge des Abends 111 veränderbar, um damit einen höheren Grad an Flexibilität für den Einsatz der Reinigungsanlage 100 im Zusammenhang mit unterschiedlich ausgestalteten die Aufnahmebereichen 181 zu ermöglichen.

Die Aktoren 121 können beliebige gut bekannte Komponenten sein, etwa Pneumatikzylinder, Hydraulikzylinder, Elektromotoren, und dergleichen, die durch geeignete Komponenten in der Basiseinheit 123 angesteuert sind. Da derartige Komponenten an sich bekannt sind, erfolgt diesbezüglich keine genauere Beschreibung.

In der dargestellten Ausführungsform ist ferner eine Ausgabedüse 115 vorgesehen, die einen gut definierten Ausgabebereich für die Prozessfluide ergibt, wobei eine entsprechende Festlegung des Ausgabebereichs, beispielsweise der Menge an ausgegebenem Prozessfluid, des Auswurfwinkels, und dergleichen auch durch Prozessparameter, etwa der Druck des entsprechenden Prozessfluids möglich ist. Ferner sind entsprechende Ausgabeleitungen 112, 113, 114 vorgesehen, in denen die jeweiligen Prozessfluide 132, 133 und 134 von entsprechenden Quellen, die gemeinsam mit 130 bezeichnet sind, entlang des Ausgabearms 111 zu der Düse 115 transportiert werden. D.h., es ist für jedes Prozessfluid eine eigene Ausgabeleitung vorgesehen, die in der Düse 115 mündet, die beispielsweise einen gemeinsamen Ausgabebereich für alle Prozessfluide darstellt, oder in der individuell abgeteilt die Bereiche für die jeweilige Ausgabe eines einzelnen Prozessfluid vorgesehen sind. Die Quelle 130 weist geeignete Mittel 125 auf, um das jeweilige Prozessfluid steuerbar über die jeweilige Ausgabeleitung zum Endbereich bzw. der Düse 115 zu führen. Beispielsweise können die einzelnen Prozessfluide innerhalb geeigneter Behälter oder Abteilungen eines einzelnen Behälters unter Druck aufbewahrt sein, so dass bei Betätigung der jeweiligen Komponente 125, etwa in Form eines Ventils, eine Einleitung des Prozessfluids in die jeweilige Ausgabeleitung erfolgt. Es können auch Ventileinrichtungen verwendet werden, in denen der Druckabfall einstellbar ist, so dass auch bei variierendem Druckverhältnissen in den jeweiligen Behältern dennoch vorgegebene Druckverhältnisse in der nachfolgenden Ausgabeleitung erreicht werden.

In anderen Ausführungsformen wird der Druck in den jeweiligen Behältern auf einem konstanten Niveau gehalten, so dass stets die gleichen Druckverhältnisse in der jeweiligen Ausgabeleitung vorherrschen. Durch die Öffnungszeit und/oder den Öffnungsdurchmesser der jeweiligen Ventileinrichtungen kann somit eine präzise gesteuerte Einstellung der Auswurfmenge sowie der Auswurfzeitdauer und der Auswurfgeschwindigkeit erreicht werden.

In einigen Ausführungsformen ist an der Düse 115 oder am Ende jeder Ausgabeleitung eine Einrichtung 116 vorgesehen, beispielsweise in Form eines Ventils, um ein Auslaufen der jeweiligen Reste der Prozessfluide zu unterbinden, wenn sich die Fluidausgabeeinrichtung 110 in der ersten Betriebsposition 101 befindet. Zu diesem Zweck kann eine einfache mechanische Ventilanordnung zum Einsatz kommen, so dass weitere Komponenten auf dem Ausgabearm 111 nicht erforderlich sind.

In anderen Ausführungsvarianten sind die Komponenten 135 in der Quelle 130 in Form von Pumpen vorgesehen, mit denen in steuerbarer Weise Druck und Menge des Prozessfluids eingestellt werden können, so dass damit auch genau definierte Bedingungen für die Benetzung der Zitzen 184 geschaffen werden können. Dabei können die Pumpen so ausgebildet sein, dass auch eine Rücksaugung von Fluidresten nach erfolgter Ausgabe möglich ist, so dass damit ein Auslaufen der Reste bei einer Lageänderung der Fluidausgabeeinrichtung 110 im Wesentlichen vermieden wird. Eine derartige Verwendung von Pumpen zur Förderung der jeweiligen Prozessfluide ist besonders vorteilhaft in Ausführungsformen, in denen eine einzelne Ausgabeleitung in der Fluidausgabeeinrichtung 110 vorgesehen ist, so dass ein unnötiger Kontakt der einzelnen Prozessfluide in der einzelnen Ausgabeleitung vermieden wird. Anzumerken ist, dass eine einzelne Ausgabeleitung in der Figur nicht gezeigt ist, dies aber beispielsweise stellvertretend eine der Leitungen 112, 113 oder 114 sein könnte, die gleichzeitig mit zwei oder mehreren der einzelnen Behälter in der Quelle 130 verbunden ist.

Figur 1c zeigt die Reinigungsanlage 100, wenn die Fluidausgabeeinrichtung 110 sich in der zweiten Betriebsposition 102 befindet, in der die Zitzen 184 effizient mit einem oder mehreren der Prozessfluide beaufschlagt werden können. Ferner ist in der gezeigten Ausführungsform die Reinigungsanlage 100 so ausgebildet, dass bei Einwirkung einer externen Kraft 105 auf eine Komponente, insbesondere auf die Fluidausgabeeinrichtung, eine Lageänderung ausgeführt wird, um eine dauerhafte Schädigung der Reinigungsanlage 100 weitestgehend zu vermeiden. Dazu können, wie dies bereits zuvor erläutert ist, die entsprechenden Aktoren so ausgebildet oder angesteuert sein, dass eine Lageänderung unter der Einwirkung der Kraft 105, wenn diese einen vorgegebenen Schwellwert übersteigt, stattfindet, so dass eine gewisse "Nachgiebigkeit" erreicht wird. In anderen Fällen wird eine oder mehrere Federn vorgesehen, um die Fluidausgabeeinrichtung in Position zu halten, bei Einwirkung der Kraft aber dennoch eine Ausweichbewegung zu ermöglichen.

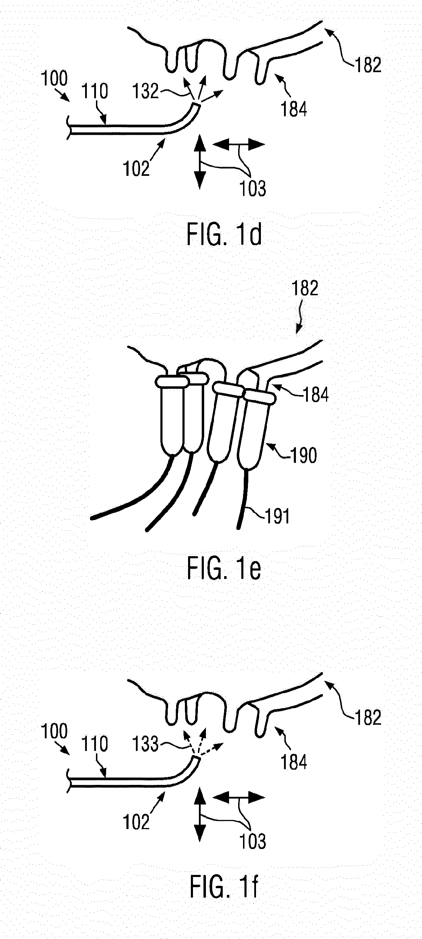

Figuren 1d bis 1f zeigen eine Abfolge unterschiedlicher Betriebszustände beim Einsatz der Reinigungsanlage 100, wenn diese zwei unterschiedliche Arten von Prozessfluiden ausgibt.

Figur 1d zeigt die Situation, in der das Tier 182 vor einem Melkvorgang durch Benetzung der Zitzen 184 mit dem Prozessfluid 132 zu behandeln ist. In der dargestellten Ausführungsform wird dabei angenommen, dass die Reinigungsanlage 100 unmittelbar an dem Melkstand angebracht ist, so dass nach der Behandlung durch die Anlage 100 keine Positionsänderung des Tiers 182 erforderlich ist, wie dies zuvor mit beispielsweise Bezug zu Figur 1a erläutert ist. In anderen Ausführungsformen kann die Behandlung durch die Anlage 100 in einem separaten Tieraufnahmebereich erfolgen, woraufhin das Tier 182 sich zu einem entsprechenden Melkstand für den eigentlichen Melkvorgang bewegt.

In der dargestellten Ausführungsform und in dem Betriebszustand befindet sich die Fluidausgabeeinrichtung 110 in der zweiten Betriebsposition 102, in der weitere Bewegungen enthalten sind, wie dies durch 103 angegeben ist, um eine möglichst effiziente Benetzung der Zitzen 184 mit dem Fluid 132 zu erreichen, ohne dass eine unerwünschte große Menge ausgegeben wird. In dieser Phase kann es gegebenenfalls erforderlich sein, dass zusätzlich ein Bediener manuell auf die Zitzen einwirkt, indem diese beispielsweise abgerieben oder anderweitig behandelt werden. Auch kann gegebenenfalls in dieser Phase die Ausgabe eines weiteren Prozessfluids, beispielsweise von Luft, Stickstoff, oder dergleichen geeignet sein, um die Zitzen 184 nach der Benetzung zu trocknen, und dergleichen.

Figur 1e zeigt das Tier 182 zu einem späteren Zeitpunkt, der in einer vorteilhaften Ausführungsform unmittelbar auf die in Figur 1d gezeigte Situation folgt, wobei Melkbecher 190 an die Zitzen 184 angelegt sind, um damit über entsprechende Leitungen 191 Milch abzusaugen. Durch die effiziente und zumindest teilweise automatisierte Vorbehandlung der Zitzen 184 durch das Prozessfluid 132 ergibt sich ein hoher hygienischer Standard während des eigentlichen Melkvorgangs, da eine Kontamination der Melkbecher 190 während des Melkvorgangs deutlich reduziert wird.

Figur 1f zeigt schematisch das Tier 182 zu einem späteren Zeitpunkt, d.h. nach Beendigung des eigentlichen Melkvorgangs und nach der Abnahme der Melkbecher, wobei die Zitzen 184 zur Nachbehandlung mit dem zweiten Prozessfluid 133 benetzt werden, das für eine entsprechende Desinfektion und/oder Nachbehandlung der Zitzen nach dem Melkvorgang sorgt. Vorteilhafterweise findet die Benetzung mit dem Prozessfluid 133 unmittelbar nach dem Melkvorgang statt, was ermöglicht wird, wenn die Reinigungsanlage 100 direkt an einem entsprechenden Melkstand vorgesehen ist, wie dies bereits zuvor erläutert ist. In anderen Ausführungsvarianten erfolgt die Nachbehandlung mittels der Reinigungsanlage 100 und dem Prozessfluid 133 in einem speziellen Tieraufnahmebereich, zu dem sich das Tier 182 nach erfolgtem Melkvorgang begibt.

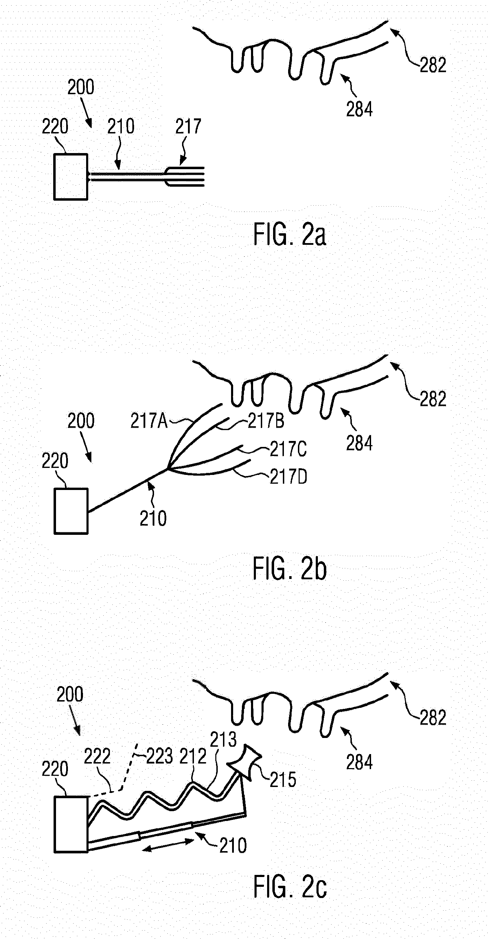

Figur 2a zeigt schematisch eine Reinigungsanlage 200 für Zitzen 284, die prinzipiell so aufgebaut ist, wie dies auch zuvor mit Bezug zu den Reinigungsanlagen 100, 100A,...,100F beschrieben ist. Anders als bei den zuvor beschriebenen Reinigungsanlagen umfasst die Anlage 200 neben der Positioniereinrichtung 220 die Fluidausgabeeinrichtung 210 in einer Form, in der eine größere Ausgabefläche erreicht wird, indem einzelne Ausgabedüsen (nicht gezeigt) vorgesehen werden, die durch eine mechanische Einrichtung 217 ausgefahren und somit unterschiedlich positioniert werden können.

Figur 2b zeigt diesbezüglich die Anlage 200, wenn sich die Fluidausgabeeinrichtung 210 in der zweiten Betriebsposition befindet, so dass einzelne Ausgabeleitungen oder Düsen 217A,..., 217D der zuvor "geschlossenen" Einrichtung 217 (siehe Figur 2a) nunmehr entfaltet sind, wodurch sich insgesamt eine genauere Ausgabe der Prozessfluide verwirklichen lässt, ohne dass die Fluidausgabeeinrichtung 210 als Ganzes über mehrere Positionen hinweg Verfahren werden muss.

Figur 2c zeigt schematisch die Anlage 200 gemäß einer weiteren Ausführungsvariante, in der beispielsweise auch die Länge der Fluidausgabeeinrichtung 210 veränderbar ist, um eine geeignete zweite Betriebsposition einzunehmen. Dazu können beispielsweise die Ausgabeleitungen 212, 213 entsprechend flexibel aufgebaut sein, so dass die Längenänderung der Fluidausgabeeinrichtung 210 möglich ist. Des weiteren kann auch eine entsprechende Winkelposition der Fluidausgabeeinrichtung 210 vorstellbar sein, so dass nahezu jede beliebige Position in der Nähe der Zitzen 284 mittels der Positioniereinrichtung 220 angefahren werden kann. Wie gezeigt, kann gegebenenfalls ein Gehäuse 222 vorgesehen sein, das die Fluidausgabeeinrichtung 210 in der ersten Betriebsposition aufnimmt, um damit einen Schutz vor mechanische Einwirkung und Kontamination zu bieten. Beispielsweise kann auch ein geeigneter Verschlussdeckel 223 vorgesehen sein, um eine vollständige Umhüllung der Fluidausgabeeinrichtung 210 zu ermöglichen. Bei Bedarf können auch geeignete Reinigungskomponenten (nicht gezeigt) in dem Gehäuse 222 vorgesehen werden, um eine mögliche äußerliche Kontamination oder Verschmutzung der Fluidausgabeeinrichtung 210 zu entfernen. Beispielsweise kann regelmäßig oder bei Bedarf eine Spülung durchgeführt werden, um eine dauerhafte Verschmutzung der Fluidausgabeeinrichtung 210 im Wesentlichen zu vermeiden. Es ist jedoch anzumerken, dass aufgrund der kontaktlosen Behandlung der Zitzen 284 durch die Reinigungsanlage eine externe Kontamination insbesondere der Fluidausgabeeinrichtung 210 wenig kritisch ist. Da ferner ein Eindringen einer Kontamination oder Verschmutzung in das Innere der Fluidausgabeeinrichtung 210 durch die wiederholte Ausgabe der Prozessfluide nahezu ausgeschlossen ist, ist auch eine Kontamination von Tier zu Tier durch die Fluidausgabeeinrichtung 210 wenig wahrscheinlich. Jedoch kann bei Auftreten einer Kontamination oder in regelmäßigen Abständen eine zusätzliche Ausgabe von Prozessfluid, beispielsweise einer speziellen Reinigungsflüssigkeit, erfolgen, die beispielsweise in der ersten Betriebsposition abgegeben wird und bei Bedarf in einem geeigneten Behälter aufgefangen wird.

Die in den Figuren 2a bis 2c gezeigten Gestaltungsformen für die Fluidausgabeeinrichtung sind nur beispielhaft aufgeführt, um darzustellen, dass sehr viele unterschiedliche Möglichkeiten bestehen, die mindestens zwei Prozessfluide ohne direkten Kontakt mit der Zitze so in unmittelbarer Nähe der Zitze bereitzustellen, dass eine gut definierte Benetzung möglich ist. Insbesondere sind auch Ausführungsformen geeignet, in denen zumindest in der Nähe der Zitzen eine fest vorgegebene Kurve durchlaufen werden kann, um damit eine möglichst effiziente Benetzung der Zitzen zu erreichen. Dazu kann in der Positioniereinheit 220 eine Kurvenscheibe oder Kulisse verwendet werden, die eine mechanisch festgelegte Bahn zumindest in der Nähe der Zitzen erzwingt. Diese Bahn wird hierin ebenfalls als die mindestens eine zweite Position bezeichnet, wobei die Ausgabe des ersten oder zweiten Prozessfluids durchgängig in der Nähe der Zitzen während des Durchlaufens der Bahn erfolgen kann. In anderen Ausführungsformen wird eine entsprechende Bahn, die mehreren zweiten Positionen entspricht, durch Ansteuerung mittels einer Steuereinrichtung erreicht.

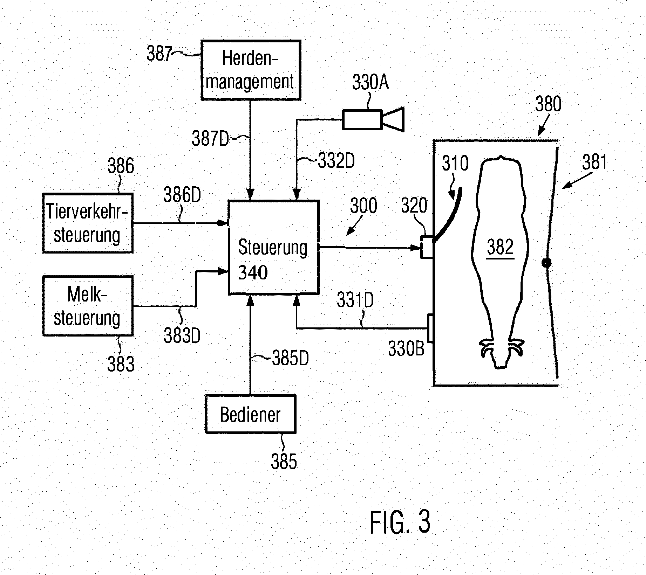

Figur 3 zeigt schematisch einen Teil einer Betriebsumgebung 380, die für die Milcherzeugung eingesetzt wird. Der Einfachheit halber ist lediglich ein einzelner Tieraufnahmebereich 381 gezeigt, der in bevorzugten Ausführungsformen auch zum Ausführen eines Melkvorgangs dient, wie dies auch zuvor erläutert ist. In anderen Ausführungsformen ist der Tieraufnahmebereich 381 ein spezieller Bereich, der lediglich zur Tierbehandlung vor und/oder nach einem Melkvorgang dient, in welchem selbst aber kein Melkvorgang stattfindet. Dazu ist eine Reinigungsanlage 300 vorgesehen, die prinzipiell aufgebaut ist, wie dies zuvor im Zusammenhang mit den Anlagen 100 und 200 beschrieben ist, und damit eine Positioniereinrichtung 320 und eine Fluidausgabeeinrichtung 310 aufweist. Ferner ist für die Reinigungsanlage 300 eine Steuereinrichtung 340 vorgesehen, die mit der Fluidausgabeeinrichtung 310 und/oder mit der Positioniereinrichtung 320 funktionsmäßig verbunden ist, um die Ausgabe des ersten und/oder des zweiten Prozessfluids und/oder die Positionierung der Fluidausgabeeinrichtung 310 auf der Grundlage eines oder mehrerer in der Steuerung implementierten Steuerungsprozesses zu steuern.

In einer Ausführungsvariante werden der Steuereinrichtung 340 Bilddaten 332D von einer Bildaufnahmeeinrichtung 330A zugeleitet, die beispielsweise Information beinhalten im Hinblick auf die Position eines Tiers 382 innerhalb des Tieraufnahmebereichs 381 und/oder die Information im Hinblick auf den Zustand des Tiers 382, insbesondere seiner Zitzen, und dergleichen enthalten. Die Bildaufnahmeeinrichtung 330A ist dabei in Bezug auf den Tieraufnahmebereich 381 geeignet positioniert, um die gewünschten Bilddaten zu erzeugen. Wie beispielsweise bereits erläutert ist, kann die Einrichtung 330A über dem Aufnahmebereich 381 angeordnet sein, so dass das Tier 382 von oben aufgenommen wird, um damit Positionsdaten zu erzeugen. In vorteilhaften Ausführungsformen wird dabei eine markante Referenzposition in dem Tier 382 identifiziert, so dass diese Referenzposition dann in präziser Weise in Bezug gesetzt werden kann zu dem Tieraufnahmebereich 381. Damit ist aber auch die genaue Position des Tiers 382 in Bezug zu der Reinigungsanlage und insbesondere der Fluidausgabeeinrichtung 310 gegeben. Die Bilddaten 332D können insbesondere in Verbindung mit tierspezifischen Daten 387D, die beispielsweise von einem Herdenverwaltungssystem 387 bereitgestellt werden, ausgewertet werden, um damit eine noch genauere Positionierung der Fluidausgabeeinrichtung 310 mittels der Steuereinrichtung 340 zu ermöglichen. Beispielsweise können die tierspezifischen Daten 387D Angaben über die genaue Position der Zitzen in Bezug auf eine Referenzposition des Tiers 382 beinhalten, so dass auf der Grundlage der ermittelten Referenzposition des Tiers 382 auch die genaue Position der Zitzen innerhalb des Tieraufnahmebereichs 381 bekannt ist oder berechnet werden kann.

In anderen Ausführungsvarianten ist die Bildaufnahmeeinrichtung 330A beispielsweise so positioniert, dass die Zitzen des Tieres 382 direkt für die optische Bildauswertung zugänglich sind, so dass dadurch in Bezug zu geeigneten Referenzpositionen innerhalb des Tieraufnahmebereichs 381 ebenfalls die exakten Positionen der Zitzen ermittelt werden können. Geeignete Positionsdaten in Form von Daten 331D können auch von einem anderen Positioniersystem 330B erhalten werden, das Teil der Anlage 300 sein kann, und geeignete Sensoren aufweist, die beispielsweise den Abstand zweier oder mehrerer Körperstellen des Tiers 382 in Bezug auf den Tieraufnahmebereich 381 ermitteln. Zu diesem Zweck sind viele an sich bekannte Sensoreinrichtungen verfügbar, die in geeigneter Weise mit der Steuereinrichtung 340, beispielsweise über verdrahtete Busverbindungen, kabellose Schnittstellen, und dergleichen gekoppelt werden können.

Ferner ist die Steuereinrichtung 340 gegebenenfalls auch mit einer Tierverkehrssteuerung 386 verbunden, die entsprechende Daten 386D bereitstellt, die beispielsweise von der Steuereinrichtung 340 ausgewertet werden können, um insbesondere die Ausgabe der jeweiligen Prozessfluide zu optimieren. Beispielsweise kann die Vorbereitung der Reinigungsanlage 300 in Abhängigkeit des Zeitraums gesteuert werden, innerhalb welchem der Eintritt des Tieres 382 in den Tieraufnahmebereich 381 von der Steuerung 386 vorhergesagt wird. Auf diese Weise kann mit hoher Wahrscheinlichkeit gewährleistet werden, dass die Anlage 300 stets einen betriebsbereiten Status aufweist, sobald ein Tier 382 in dem Tieraufnahmebereich 381 zu behandeln ist.

Ferner kann eine Melksteuerung 383 entsprechende Daten 383D zur Verarbeitung in der Steuereinrichtung 340 bereitstellen, so dass damit insbesondere auch die Ausgabe der Prozessfluide gesteuert werden kann. Beispielsweise gibt die Melksteuerung 383 über die Daten 383D gegebenenfalls das Ende eines Melkvorgangs an die Steuereinrichtung 340 bekannt, so dass daraufhin automatisiert eine gewünschte Prozessflüssigkeit an den Zitzen des Tiers 382 bereitgestellt wird. Die Melksteuerung 383 kann auch weitere Informationen, beispielsweise im Hinblick auf den Abfall eines Melkbechers während des Melkvorgangs bereitstellen, so dass die Steuereinrichtung 340 gegebenenfalls einen entsprechend angepassten Ablauf des nachfolgenden Reinigungsprozesses oder Behandlungsprozesses veranlasst. Beispielsweise kann dann eine intensivere Beaufschlagung mit einem Prozessfluid erfolgen, da möglicherweise nach Abfall eines Melkbechers und damit Kontakt mit dem Boden und erneutem Anlegen des Melkbechers ein größeres Risiko einer Kontamination der Zitze besteht.

Die Steuereinrichtung 340 kann auch Daten bzw. Steuersignale 385D von einem Bediener 385 empfangen, die beispielsweise über eine verdrahtete oder eine kabellose Verbindung bereitgestellt werden. Die Daten 385D können beispielsweise die Steuereinrichtung 340 veranlassen, einen entsprechenden Prozess zur Ausgabe eines Prozessfluids auszulösen oder zu verzögern, beispielsweise weil sich die Ankunftszeit des Bedieners an dem Tieraufnahmebereich 381 verzögert.

Die Steuereinrichtung 340 ist typischerweise in Form eines Prozessors vorgesehen, in welchem entsprechende Steuerungsalgorithmen in Form von Programmbefehlen in einem geeigneten Speichermedium hinterlegt sind, die bei Abarbeitung in dem Prozessor zur Umsetzung der jeweiligen Algorithmen führen. Beispielsweise sind geeignete Bildverarbeitungsprozesse in der Steuereinrichtung 340 implementiert, in der die Bilddaten 332D, sofern sie nicht bereits in der Bildaufnahmeeinrichtung 330A geeignet vorverarbeitet sind, entsprechend verarbeitet werden, um die gewünschte Information zu extrahieren. Diesbezüglich können gut etablierte Bildauswerteverfahren verwendet werden, in denen beispielsweise markante Bildinhalte identifiziert und beispielsweise zur Erzeugung geeigneter Positionsdaten herangezogen werden. In ähnlicher Weise können entsprechende Datenverarbeitungsprozesse hinterlegt sein, die auf den Daten 331D, 387D, 386D, 383D und 385D operieren, um daraus die für das Steuern der Ausgabe der Prozessfluide und/oder das Steuern der Positioniereinrichtung 320 erforderlichen Daten zu erzeugen. Die Steuereinrichtung 340 kann zusammen mit einer oder mehreren der anderen Steuerungen in einer gemeinsamen genutzten Recheneinheit implementiert sein, wobei die Anbindung an die Fluidausgabeeinrichtung 310 und die Positioniereinrichtung 320 über eine geeignete Busverbindung oder einen kabellosen Übertragungskanal erfolgt. Die Steuereinrichtung 340 kann auch als alleinstehende Steuereinheit über geeignete Schnittstellen mit anderen Steuerungskomponenten in Verbindung stehen, um die erforderlichen Daten zu empfangen.

Die vorliegende Erfindung stellt somit eine Reinigungsanlage für Zitzen von Milchtieren bereit, die zumindest zwei Prozessfluide separat und gesteuert ausgibt, so dass ein effizienter Ablauf des Melkvorgangs für eine Vielzahl von Tieren ermöglicht wird. Die in der Reinigungsanlage ausgegebenen Prozessfluide sind typischerweise unterschiedliche Fluide, beispielsweise eine Flüssigkeit, die zum Anlösen oder Aufweichen von festsitzenden Verschmutzungen insbesondere vor einem eigentlichen Melkvorgang dient, und eine Flüssigkeit, die vorzugsweise der Nachbehandlung der Zitze nach einem Melkvorgang dient, was auch als "Dippen" bekannt ist.

## Patentansprüche

1. Reinigungsanlage (100, 200) für Zitzen (184, 284) eines Milchtieres mit:
einer Fluidausgabeeinrichtung (110, 210), die an einem Tieraufnahmebereich (181) zur Aufnahme des Milchtieres vor, während oder nach einem Melkvorgang anbringbar und ausgebildet ist, eine erste Prozessflüssigkeit (132) und eine zweite Prozessflüssigkeit (133) separat zueinander auszugeben, und
einer Positioniereinrichtung (120, 220), die mit der Fluidausgabeeinrichtung gekoppelt und ausgebildet ist, die Fluidausgabeeinrichtung so zu positionieren, dass die Zitzen des Milchtieres zumindest teilweise mit der ersten und der zweiten Prozessflüssigkeit beaufschlagbar sind,
wobei die Fluidausgabeeinrichtung einen Ausgabearm (111), der durch die Positioniereinrichtung zumindest an einer ersten Betriebsposition (101), in der der Ausgabearm Zugänglichkeit zu den Zitzen gewährt, und an mindestens einer zweiten Betriebsposition (102), in der die Zitzen mit der ersten und/oder zweiten Prozessflüssigkeit beaufschlagbar sind und die eine kontinuierliche Bewegung in der Nähe der Zitzen mit kontinuierlicher Ausgabe der zweiten Prozessflüssigkeit umfasst, positionierbar ist, und Ausgabeleitungen (112, 113) zum Transport der jeweiligen Prozessflüssigkeit von entsprechenden Quellen (130) entlang des Ausgabearms zu einer Ausgabedüse (115), die einen gut definierten Ausgabebereich für die erste und zweite Prozessflüssigkeit definiert, aufweist.

2. Reinigungsanlage für Zitzen nach Anspruch 1, wobei die Fluidausgabeeinrichtung eine erste Ausgabeleitung (112, 212), die gesteuert mit einer Quelle für die erste Prozessflüssigkeit verbindbar ist, und eine zweite Ausgabeleitung (113, 213), die gesteuert mit einer Quelle für die zweite Prozessflüssigkeit verbindbar ist, aufweist.

3. Reinigungsanlage für Zitzen nach einem der Ansprüche 1 oder 2, wobei die erste Prozessflüssigkeit zur Beaufschlagung der Zitzen vor dem Anlegen von Melkbechern und die zweite Prozessflüssigkeit zur Beaufschlagung der Zitzen nach dem Abnehmen der Melkbecher dienen.

4. Reinigungsanlage für Zitzen nach Anspruch 1, die ferner ausgebildet ist, bei Überschreitung eines Schwellwerts einer mechanischen Einwirkung auf den sich in der mindestens einen zweiten Betriebsposition befindlichen Ausgabearm diesen zumindest temporär aus der zweiten Betriebsposition wegzubewegen.

5. Reinigungsanlage für Zitzen nach einem der vorhergehenden Ansprüche, wobei die Fluidausgabeeinrichtung ferner ausgebildet ist, ein drittes Prozessfluid (134) auszugeben, das zur Verringerung der Oberflächenbenetzung einer Zitze nach ihrer Beaufschlagung mit der ersten oder der zweiten Prozessflüssigkeit dient.

6. Reinigungsanlage für Zitzen nach einem der vorhergehenden Ansprüche, die so ausgebildet ist, dass sie an dem Tieraufnahmebereich anbringbar ist, der zum Ausführen des Melkvorgangs vorgesehen ist.

7. Reinigungsanlage für Zitzen nach einem der vorhergehenden Ansprüche, die ferner eine Steuereinrichtung (340) aufweist, die ausgebildet ist, die Ausgabe der ersten und der zweiten Prozessflüssigkeit in Abhängigkeit von einem Status des Tieraufnahmebereichs und/oder eines Status eines zu melkenden oder gemolkenen Tieres und/oder in Abhängigkeit tierspezifischer Daten des zu melkenden Tieres und/oder in Abhängigkeit eines eingespeisten Steuersignals und/oder in Abhängigkeit von aktuellen Bilddaten des zu melkenden oder gemolkenen Tieres zu steuern.

8. Reinigungsanlage nach Anspruch 7, wobei die Steuereinrichtung ferner ausgebildet ist, die Positioniereinrichtung zu veranlassen, die mindestens eine zweite Betriebsposition unter Auswertung der Bilddaten des zu melkenden oder gemolkenen Tieres und/oder unter Anwendung von Positionsdaten des zu melkenden oder gemolkenen Tieres in dem Tieraufnahmebereich und/oder unter Anwendung der tierspezifischen Daten anzufahren.

## Claims

1. A cleaning system (100, 200) for teats (184, 284) of a dairy animal comprising:
a fluid dispenser (110, 210) attachable to an animal reception area (181) for receiving the dairy animal before, during or after a milking operation and adapted to dispense a first process liquid (132) and a second process liquid (133) separately from each other, and
positioning means (120, 220) coupled to said fluid dispenser and adapted to position said fluid dispenser such that the teats of the dairy animal are at least partially exposed to said first and second process liquids,
wherein the fluid dispenser comprises
a dispensing arm (111) which is positioned by the positioning means at least at a first operating position (101) where the dispensing arm provides access to the teats and at at least at a second operating position (102) where the first and/or second process liquids can be applied to the teats and which comprises a continuous movement in the vicinity of the teats with continuous dispensing of the second process liquid, and
output conduits (112, 113) for transporting the respective process liquids from respective sources (130) along the output arm to a dispensing nozzle (115) defining a well delineated dispensing area for the first and second process liquids.

2. A teat cleaning apparatus according to claim 1, wherein the fluid dispenser comprises a first dispensing line (112, 212) controllably connectable to a supply for the first process liquid and a second dispensing line (113, 213) controllably connectable to a supply for the second process liquid.

3. A cleaning system for teats according to any of claims 1 or 2, wherein the first process liquid is used to clean the teats prior to the application of teat cups and the second process liquid is used to clean the teats after the removal of the teat cups.

4. A cleaning system for teats according to claim 1, which is further designed, when a threshold value of a mechanical effect on the output arm located in the at least one second operating position is exceeded, to move it away from the second operating position at least temporarily.

5. A cleaning system for teats according to one of the preceding claims, the fluid dispenser being further adapted to dispense a third process fluid (134) for reducing the surface wetting of a teat after it has been subjected to the first or second process liquid.

6. A cleaning system for teats according to one of the preceding claims, designed to be attachable to the animal reception area intended for carrying out the milking operation.

7. A cleaning system for teats according to one of the preceding claims, further comprising control means (340) adapted to control the dispensing of the first and second process liquids according to a status of the animal reception area and/or a status of an animal to be milked and/or according to animal-specific data of the animal to be milked and/or according to an input control signal and/or according to current image data of the animal to be milked.

8. A system for cleaning teats according to claim 7, wherein the control device is further designed to cause the positioning device to approach said at least one second operating position by evaluating the image data of the animal to be milked and/or by using position data of the animal to be milked in the animal reception area and/or by using the animal-specific data.

## Revendications

1. Installation de nettoyage (100, 200) pour trayons (184, 284) d'un animal laitier comprenant:
un distributeur de fluide (110, 210) pouvant être fixé à une zone de réception d'animal (181) pour recevoir l'animal laitier avant, pendant ou après une opération de traite et conçu pour distribuer un premier liquide de traitement (132) et un deuxième liquide de traitement (133) séparément l'un de l'autre, et
des moyens de positionnement (120, 220) couplés audit distributeur de fluide et conçus pour positionner ledit distributeur de fluide de telle sorte que les trayons de l'animal laitier soient au moins partiellement exposés auxdits premier et deuxième liquides de traitement,
dans lequel le distributeur de fluide comprend un bras de distribution (111) qui est positionné par le moyen de positionnement au moins à une première position de fonctionnement (101) où le bras de distribution permet d'accéder aux trayons et au moins à une seconde position de fonctionnement (102) où les premier et/ou deuxième liquides de traitement peuvent être appliqués aux trayons et qui comprend un mouvement continu au voisinage des trayons avec distribution continue du deuxième liquide de traitement, et des conduits de sortie respectifs (112, 113) pour transporter le liquide de traitement respectif à partir d'alimentations respectives (130) le long du bras de sortie vers une buse de distribution (115) définissant une zone de distribution bien délimitée pour les premier et deuxième liquides de traitement.

2. Installation de nettoyage de trayons selon la revendication 1, dans lequel le distributeur de fluide comprend une première conduite de distribution (112, 212) pouvant être connectée de manière contrôlée à une alimentation pour le premier liquide de traitement et une seconde conduite de distribution (113, 213) pouvant être connectée de manière contrôlée à une alimentation pour le deuxième liquide de traitement.

3. Installation de nettoyage pour trayons selon l'une quelconque des revendications 1 ou 2, dans lequel le premier liquide de traitement est utilisé pour nettoyer les trayons avant l'application des gobelets trayeurs et le deuxième liquide de traitement est utilisé pour nettoyer les trayons après le retrait des gobelets trayeurs.

4. Installation de nettoyage pour trayons selon la revendication 1, qui est en outre conçu, lorsqu'une valeur seuil d'un effet mécanique sur le bras de sortie situé dans au moins une seconde position de fonctionnement est dépassée, pour l'éloigner au moins temporairement de la seconde position de fonctionnement.

5. Installation de nettoyage pour trayons selon l'une des revendications précédentes, le distributeur de liquide étant en outre conçu pour distribuer un troisième fluide de traitement (134) pour réduire le mouillage de surface d'un trayon après qu'il a été soumis au premier ou deuxième liquide de traitement.

6. Installation de nettoyage des trayons selon l'une des revendications précédentes, conçu pour être fixé à l'aire de réception des animaux destinée à effectuer l'opération de traite.

7. Installation de nettoyage des trayons selon l'une des revendications précédentes, comprenant en outre un moyen de commande (340) conçu pour commander la distribution des premier et deuxième liquide de traitement selon un état de la zone de réception de l'animal et/ou un état d'un animal à traire et/ou selon des données spécifiques de l'animal à traire et/ou selon un signal de commande d'entrée et/ou selon des données d'image actuelles de l'animal à traire.

8. Installation de nettoyage des trayons selon la revendication 7, dans lequel le dispositif de commande est en outre conçu pour amener le dispositif de positionnement à adopter ladite au moins une seconde position de fonctionnement en évaluant les données d'image de l'animal à traire et/ou en utilisant les données de position de l'animal à traire dans la zone de réception et/ou en utilisant les données spécifiques à l'animal.
